(19) Europäisches Patentamt
European Patent Office
Office européen des brevets

(11) **EP 4 787 727 A1**

(12) **EUROPEAN PATENT APPLICATION**
published in accordance with Art. 153(4) EPC

(43) Date of publication:
**05.08.2026 Bulletin 2026/32**

(21) Application number: **24872850.3**

(22) Date of filing: **24.09.2024**

(51) International Patent Classification (IPC):
$H04B\ 7/06^{(2006.01)}$     $H04W\ 52/02^{(2009.01)}$
$H04B\ 7/08^{(2006.01)}$     $H04W\ 72/21^{(2023.01)}$
$H04W\ 72/231^{(2023.01)}$     $H04W\ 72/232^{(2023.01)}$
$H04W\ 8/24^{(2009.01)}$     $H04L\ 5/00^{(2006.01)}$

(52) Cooperative Patent Classification (CPC):
H04B 7/06; H04B 7/08; H04L 5/00; H04W 8/24;
H04W 52/02; H04W 72/21; H04W 72/231;
H04W 72/232

(86) International application number:
**PCT/KR2024/014348**

(87) International publication number:
**WO 2025/071142 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 26.09.2023   KR 20230129810
04.04.2024   KR 20240046276

(71) Applicant: **LG Electronics Inc.**
**Yeongdeungpo-gu**
**Seoul 07336 (KR)**

(72) Inventors:
• **KIM, Seonwook**
 **Seoul 06772 (KR)**
• **YANG, Suckchel**
 **Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING AND RECEIVING SIGNAL IN WIRELESS COMMUNICATION SYSTEM**

(57) A terminal according to at least one of embodiments disclosed in the present specification receives a channel state information (CSI) report configuration via higher layer signaling, receives downlink control information (DCI) including information for a CSI request via a physical downlink control channel (PDCCH), and transmits a CSI report related to the CSI request on the basis of satisfaction of a condition for a valid CSI report, wherein, on the basis of the CSI report configuration including a list of sub-configurations, the terminal may determine a Z value and a Z' value for determining whether the condition for a valid CSI report is satisfied only on the basis of on some of the (Z, Z')-candidate values.

**FIG. 11**

## Description

### TECHNICAL FIELD

The present disclosure relates to a wireless communication system, and more particularly, to a method and apparatus for transmitting or receiving a downlink/uplink radio signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

Energy conservation at a base station (BS) can contribute to building an eco-friendly network and reducing operational expenditure (OPEX) for telecommunications companies by reducing carbon emissions, and thus is considered important in a wireless communication system, including 3rd generation partnership project (3GPP). In particular, with the introduction of 5G communications requiring a higher transmission rate, BSs need to include a greater number of antennas and provide services through wider bandwidths and frequency bands, and the energy costs of BSs consumed for this purpose have reached 20% of the total OPEX. Due to this background, network energy savings (NES) have been discussed in wireless communication standardization, including 3GPP new radio (NR).

### DISCLOSURE

#### Technical Problem

One object of the present disclosure is to provide a method of efficiently performing a wireless signal transmission and reception process and a device therefor. As an example, a method and device for more efficiently performing transmission and reception of channel state information (CSI) reporting in an environment in which CSI report configuration including one or more sub-configurations for NES is supported.

The objects that could be achieved are not limited to the objects described above, and other objects not described may be inferred from the description below.

#### Technical Solution

According to an aspect of the present disclosure, a method performed by a user equipment (UE) includes receiving channel state information (CSI) report configuration via higher layer signaling, receiving downlink control information (DCI) including information for a CSI request through a physical downlink control channel (PDCCH), and transmitting a CSI report related to the CSI request based on a condition for valid CSI report being satisfied, wherein the UE determines whether the condition for the valid CSI report is satisfied based on a Z value and a Z' value, the Z value being related to a time length from a last symbol of the PDCCH to a first symbol of the CSI report, and the Z' value being related to a time length from a last symbol of a channel state information-reference signal (CSI-RS) to the first symbol of the CSI report, and wherein based on the CSI report configuration including a list of sub-configurations for separately configuring at least one of a CSI codebook, an enablement of a CSI-RS antenna port subset, a CSI-RS resource subset, or power offset information for each sub-configuration, the UE determines the Z value and the Z' value based on only a part of (Z, Z')-candidate values among a plurality of (Z, Z')-candidate values.

Based on the CSI report configuration including the list of the sub-configurations, the UE may determine the Z value and the Z' value only based on the third (Z, Z')-candidate values, excluding the first (Z, Z')-candidate values and the second (Z, Z')-candidate values for each of a plurality of conditions related to CSI, which are not more than 4 CSI-RS ports for a single resource.

The multiple conditions include a first condition, and the first condition may be satisfied when (i) a numeral related to subcarrier spacing (SCS) is less than a threshold, (ii) CSI is triggered while 0 CSI processing units (CPUs) are occupied, (iii) a physical uplink shared channel (PUSCH) for transmitting the CSI report does not include any of a transport block or HARQ-ACK, (iv) the CSI report does not include a CSI-RS Resource Indicator (CRI) and has a wideband frequency granularity with a maximum of 4 CSI-RS ports or less for a single resource, and (v) a codebook type is a single panel or a report content is configured to cri-rank indicator-channel quality indicator (cri-RI-CQI).

The multiple conditions include a second condition, and the second condition may be satisfied when (iv) the CSI report does not include a CSI-RS Resource Indicator (CRI) and has a wideband frequency granularity with a maximum of 4 CSI-RS ports or less for a single resource, and (v) the codebook type is a single panel or the report content is configured to cri-rank indicator-channel quality indicator (cri-RI-CQI).

The plurality of (Z, Z')-candidate values may include first (Z, Z')-candidate values, second (Z, Z')-candidate values greater than the first (Z, Z')-candidate values for the same numerology, and third (Z, Z')-candidate values greater than the first (Z, Z')-candidate values and the second (Z, Z')-candidate values for the same numerology. Based on the CSI report configuration including the list of the sub-configurations, the UE may determine the Z value and the Z' value based only on the third (Z, Z')-candidate values.

The Z value may be related to the time length from the end of the last symbol of the PDCCH to the start of a cyclic prefix (CP) of the first symbol of the CSI report, and the Z' value may be related to the time length from the end of the last symbol of the CSI-RS resource to the start of the CP of the first symbol of the CSI report.

Based on the CSI report configuration including the list of the sub-configurations, the UE may determine the Z value and the Z' value based only on Table A below:

[Table A]

| μ | Z | Z' |
|---|---|---|
| 0 | 40 | 37 |
| 1 | 72 | 69 |
| 2 | 141 | 140 |
| 3 | 152 | 140 |
| 5 | 608 | 560 |
| 6 | 1216 | 1120 |

According to another aspect of the present disclosure, a non-transitory recording medium may be provided that is configured to store instructions that, when executed by a processor of a UE, cause the UE to perform the method described above.

According to another aspect of the present disclosure, a device includes at least one memory configured to store instructions, and at least one processor configured to perform operations by executing the instructions, wherein the operations performed by the at least one processor include receiving channel state information (CSI) report configuration via higher layer signaling, receiving downlink control information (DCI) including information for a CSI request through a physical downlink control channel (PDCCH), and transmitting a CSI report related to the CSI request based on a condition for valid CSI report being satisfied, wherein the device determines whether the condition for the valid CSI report is satisfied based on a Z value and a Z' value, the Z value being related to a time length from a last symbol of the PDCCH to a first symbol of the CSI report, and the Z' value being related to a time length from a last symbol of a channel state information-reference signal (CSI-RS) to the first symbol of the CSI report, and wherein based on the CSI report configuration including a list of sub-configurations for separately configuring at least one of a CSI codebook, an enablement of a CSI-RS antenna port subset, a CSI-RS resource subset, or power offset information for each sub-configuration, the device determines the Z value and the Z' value based on only a part of (Z, Z')-candidate values among a plurality of (Z, Z')-candidate values.

The device may further include a transceiver. The device may be a UE configured to operate in a wireless communication system.

The device may be a processing device configured to control a UE in a wireless communication system.

According to another aspect of the present disclosure, a method performed by a base station (BS) includes transmitting channel state information (CSI) report configuration via higher layer signaling, transmitting downlink control information (DCI) including information for a CSI request through a physical downlink control channel (PDCCH), and receiving a CSI report related to the CSI request based on a condition for valid CSI report being satisfied, wherein whether the condition for the valid CSI report is satisfied is determined based on a Z value and a Z' value, the Z value being related to a time length from a last symbol of the PDCCH to a first symbol of the CSI report, and the Z' value being related to a time length from a last symbol of a channel state information-reference signal (CSI-RS) to the first symbol of the CSI report, and wherein based on the CSI report configuration including a list of sub-configurations for separately configuring at least one of a CSI codebook, an enablement of a CSI-RS antenna port subset, a CSI-RS resource subset, or power offset information for each sub-configuration, the Z value and the Z' value are determined based on only a part of (Z, Z')-candidate values among a plurality of (Z, Z')-candidate values.

According to another aspect of the present disclosure, a base station (BS) includes at least one memory configured to store instructions, and at least one processor configured to perform operations by executing the instructions, wherein the operations performed by the at least one processor include transmitting channel state information (CSI) report configuration via higher layer signaling, transmitting downlink control information (DCI) including information for a CSI request through a physical downlink control channel (PDCCH), and receiving a CSI report related to the CSI request based on a condition for valid CSI report being satisfied, whether the condition for the valid CSI report is satisfied is determined based on a Z value and a Z' value, the Z value being related to a time length from a last symbol of the PDCCH to a first symbol of the CSI report, and the Z' value being related to a time length from a last symbol of a channel state information-reference signal (CSI-RS) to the first symbol of the CSI report, and wherein based on the CSI report configuration including a list of sub-configurations for separately configuring at least one of a CSI codebook, an enablement of a CSI-RS antenna port subset, a CSI-RS resource subset, or power offset information for each sub-configuration, and the Z value and the Z' value are determined based on only a part of (Z, Z')-candidate values among a plurality of (Z, Z')-candidate values.

## Advantageous Effects

According to an embodiment, a wireless signal transmission and reception process may be performed efficiently. As an example, transmission and reception of channel state information (CSI) reporting may be efficiently performed in an environment in which CSI report configuration including one or more sub-configurations for network energy savings (NES) is supported.

Other effects not described may be inferred from the description below.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDSCH and acknowledgment/negative acknowledgment (ACK/NACK) transmission process.

FIG. 6 illustrates an exemplary PUSCH transmission process.

FIG. 7 illustrates an example of a channel state information (CSI) related procedure.

FIG. 8 is a diagram for explaining determination of CSI calculation time and valid CSI report according to an embodiment.

FIG. 9 illustrates an example of an operation of a UE and a network according to an embodiment.

FIG. 10 illustrates an example of aperiodic CSI reporting according to an embodiment.

FIG. 11 illustrates a flow of a UE operation according to an embodiment.

FIG. 12 illustrates a flow of a BS operation according to an embodiment.

FIG. 13 illustrates a communication system applied to the present disclosure.

FIG. 14 illustrates wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

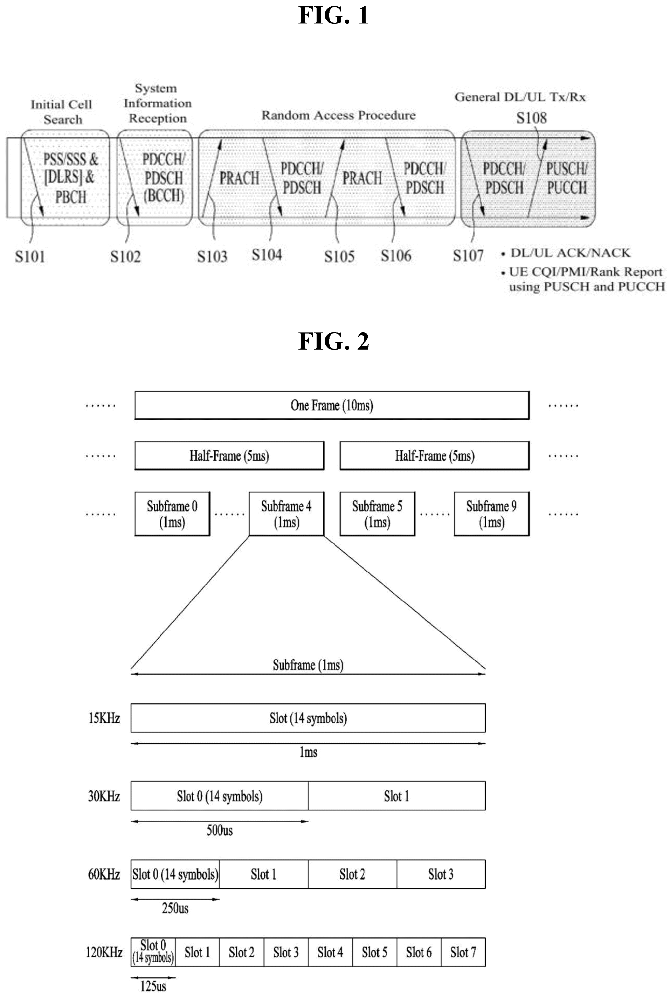

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

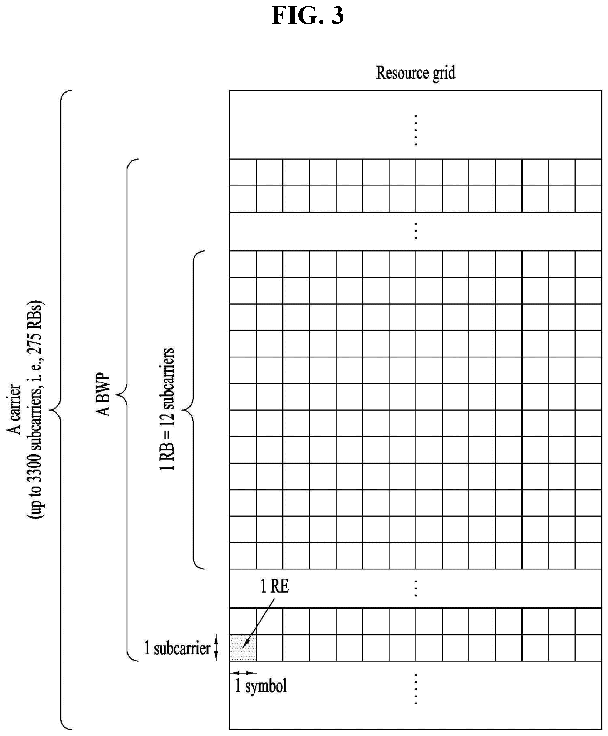

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

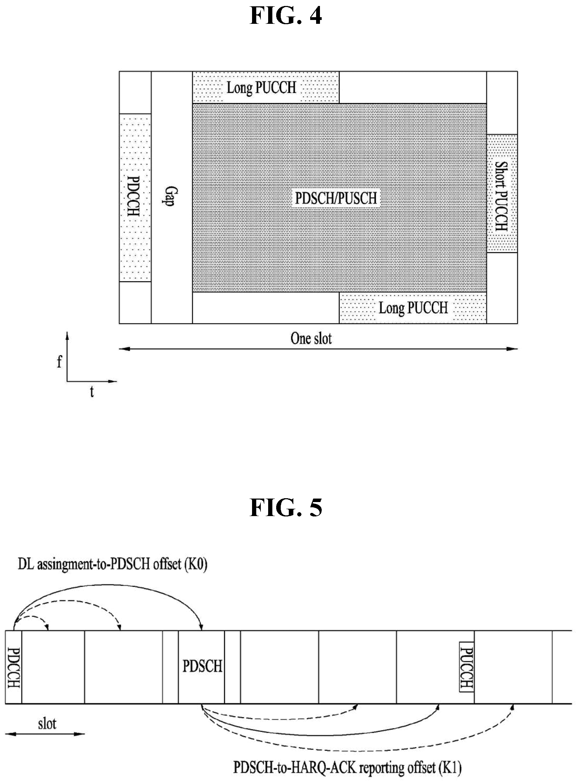

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.
monitoringSlotPeriodicityAndOffset: A PDCCH monitoring periodicity (in slots) and a PDCCH monitoring offset (in slots).
monitoringSymbolsWithinSlot: PDCCH monitoring symbols in a slot (e.g., the first symbol(s) of a CORESET).
nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |

(continued)

| DCI format | Usage |
|---|---|
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

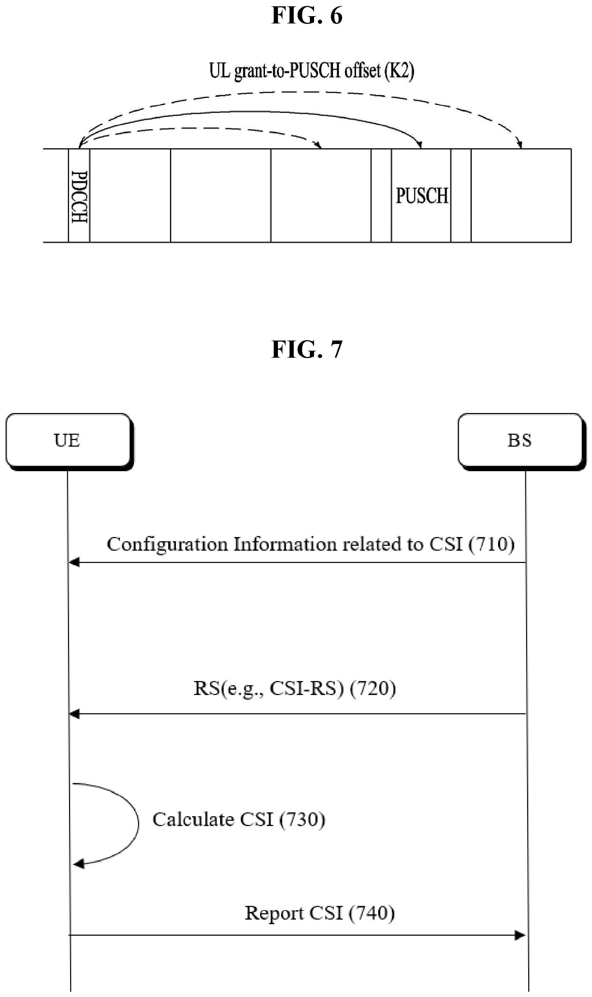

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI reporting setting-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI reporting setting may include configuration for a feedback type, a measurement resource, a report type, and the like. The NZP-CSI-RS resource set may be used for CSI reporting setting of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI reporting setting. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a medium access control (MAC) control element (CE) indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

_CSI enhancement for Network Energy Saving_

To determine the impact of network energy saving (NES) on the channel quality of UEs when NES is introduced, enhancements to a CSI framework have been discussed at the NR Rel. 18 standardization meeting. Accordingly, this specification discloses various embodiments for CSI processing unit (CPU) occupation and CSI measurement for CSI reporting configured for NES.

Table 6 shows an excerpt of items to be applied to the 3GPP TS38.214 document according to the agreement reached in recent NR standardization discussions (R1-2308743).

[Table 6]

| **5.2.1.1 Reporting settings** |
| --- |
| Each Reporting Setting _CSI-ReportConfig_ is associated with a single downlink BWP (indicated by higher layer parameter _B WP-Id_) given in the associated _CSI-ResourceConfig_ for channel measurement and contains the parameter(s) for one CSI reporting band: codebook configuration including codebook subset restriction, time-domain behavior, frequency granularity for CQI and PMI, measurement restriction configurations, and the CSI-related quantities to be reported by the UE such as the layer indicator (LI), L1-RSRP, L1-SINR, CRI, and SSBRI (SSB Resource Indicator) and CapabilityIndex.) The time domain behavior of the _CSI-ReportConfig_ is indicated by the higher layer parameter _reportConfigType_ and can be set to 'aperiodic', 'semiPersistentOnPUCCH', 'semiPersistentOnPUSCH', or 'periodic'. For 'periodic' and 'semiPersistentOnPUCCH'/'semiPersistentOnPUSCH' CSI reporting, the configured periodicity and slot offset applies in the numerology of the UL BWP in which the CSI report is configured to be transmitted on. The higher layer parameter _reportQuantity_ indicates the CSI-related, L1-RSRP-related, L1-SINR-related or CapabilityIndex-related quantities to report. The _reportFreqConfiguration_ indicates the reporting granularity in the frequency domain, including the CSI reporting band and if PMI/CQI reporting is wideband or subband. The _timeRestrictionForChannelMeasurements_ parameter in _CSI-ReportConfig_ can be configured to enable time domain restriction for channel measurements and |

(continued)

*timeRestrictionForInterferenceMeasurements* can be configured to enable time domain restriction for interference measurements. The *CSI-ReportConfig* can also contain *CodebookConfig,* which contains configuration parameters for Type-I, Type II, Enhanced Type II CSI, or Further Enhanced Type II Port Selection including codebook subset restriction when applicable, and configurations of group-based reporting. A UE is not expected to be configured with a CSI report setting associated with a dormant DL BWP if the *reportConfigType* is set to 'aperiodic'. A *CSI-ReportConfig* can contain a list of sub-configurations, provided by the higher layer parameter *[csi-ReportSubConfigList],* where each sub-configuration is identified by *[csi-ReportSubConfigID]* and corresponds to a list of one or more CSI-RS resources or corresponds to a CSI-RS antenna port subset, and/or corresponds to a power offset for PDSCH relative to CSI-RS. A UE is not expected to be configured with a *CSI-ReportConfig* that contains a mix of sub-configuration(s) each corresponding to a list of one or more CSI-RS resources and some other sub-configuration(s) each corresponding to CSI-RS antenna port subset.

<omitted text>

**5.2.1.4.1 Resource Setting configuration)**

<omitted text>

A subset of resources, where a subset contains one or more resources, of a NZP CSI-RS Resource Set for channel measurement corresponds to a sub-configuration contained in a *CSI-ReportConfig* if each of the sub-configuration(s) contains a list of one or more NZP CSI-RS resources, or all the resources of a NZP CSI-RS Resource Set for channel measurement correspond to each of the sub-configuration(s) contained in a *CSI-ReportConfig* if each of the sub-configurations does not contain a list of NZP CSI-RS resources, as described in Clause 5.2.1.4.2.

Except for L1-SINR, if interference measurement is performed on NZP CSI-RS, a UE does not expect to be configured with more than one NZP CSI-RS resource in the associated resource set within the resource setting for channel measurement. Except for L1-SINR, the UE configured with the higher layer parameter *nzp-CSI-RS-Resources-ForInterference* may expect no more than 18 NZP CSI-RS ports configured in a NZP CSI-RS resource set.

For CSI measurement(s) other than L1-SINR, a UE assumes:

- each NZP CSI-RS port configured for interference measurement corresponds to an interference transmission layer.
- all interference transmission layers on NZP CSI-RS ports for interference measurement take into account the associated EPRE ratios configured in 5.2.2.3.1;

- other interference signal on REs of NZP CSI-RS resource for channel measurement, NZP CSI-RS resource for interference measurement, or CSI-IM resource for interference measurement.

For L1-SINR measurement with dedicated interference measurement resources, a UE assumes:

- the total received power on dedicated NZP CSI-RS resource for interference measurement or dedicated CSI-IM resource for interference measurement corresponds to interference and noise.]

**5.2.1.4.2 Report Quantity Configurations**

<omitted text>

If the UE is configured with a *CSI-ReportConfig* that contains a list of sub-configurations, provided by the higher layer parameter [*csi-ReportSubConfigList*]:

- The UE expects to be configured with the higher layer parameter *codebookType* set to 'typeI-SinglePanel' or 'typeI-MultiPanel'. If the UE indicates a capability for supporting mixed codebook combination in a slot with [ABC], each sub-configuration can be configured with the higher layer parameter *codebookType* set to 'typeI-SinglePanel' or 'typeI-MultiPanel'.

- Each sub-configuration can be configured with an antenna port subset using the higher layer bitmap parameter [*port-subsetIndicator*] which contains the bit sequence $p_0,p_1,...,p_{Pm-1}$, where $p_0$ is the MSB and $p_{Pm-1}$ is the LSB, bit

$p_i$ corresponds to antenna port 3000+i, and Pm is the number of ports *nrofPorts* configured for the CSI-RS resources(s) within the *NZP-CSI-RS-ResourceSet* contained in the *CSI-ResourceConfig* for channel measurement that corresponds to the *CSI-ReportConfig*. A bit value 0 in [*port-subsetIndicator*] indicates that the corresponding antenna port is disabled for the sub-configuration, whereas bit value 1 indicates that the antenna port is enabled and belongs to the antenna port subset for the sub-configuration.

- If a sub-configuration is configured with an antenna port subset, then the sub-configuration can be configured with a [RI restriction parameter] and, if the number of antenna ports of the subset greater than 2, with [n1-n2 parameter] if the higher layer parameter *codebookType* is set to 'typel-SinglePanel' or with *[ng-n1-n2 parameter]* if the higher layer parameter *codebookType* is set to 'typel-MultiPanel', and, if the corresponding number of antenna ports of the subset is 2, with *twoTX-CodebookSubsetRestriction,* where the parameters [RI restriction], [n1-n2], [ng-n1-n2], *twoTX-CodebookSubsetRestriction* are as described in Clauses 5.2.2.2.1 and 5.2.2.2.2.

- A sub-configuration can be configured with a list of NZP CSI-RS resources, provided by [*nzp-CSI-RS-resourceList*], which indicates one or more NZP CSI-RS resources, within the *NZP-CSI-RS-ResourceSet* contained in the *CSI-ResourceConfig* for channel measurement which corresponds to the *CSI-ReportConfig.* [The list of NZP CSI-RS resources is identical to or has no intersection with a list of NZP CSI-RS resources configured for any other sub-configuration(s) within the *CSI-ReportConfig.]*

- A sub-configuration can be configured with a power offset provided by [*powerOffset*].

- If a sub-configurations is not configured with [*nzp-CSI-RS-resourceList*] then the sub-configuration shall be associated with all the NZP CSI-RS resources within the *NZP-CSI-RS-ResourceSet* contained in the *CSI-ResourceConfig* for channel measurement which corresponds to the *CSI-ReportConfig.*

- The UE reports CSI(s) for one or more sub-configurations according to Clauses 5.2.1.5.1, 5.2.1.5.2, 5.2.3 and 5.2.4, and according to the higher layer parameter *reportQuantity* configured for that *CSI-ReportConfig.*

If the UE is configured with a *CSI-ReportConfig* with the higher layer parameter *reportQuantity* set to 'ssb-Index-RSRP' or 'ssb-Index-RSRP- Index', the UE shall report SSBRI, where SSBRI $k$ ($k \geq 0$) corresponds to the configured ($k$+1)-th entry of the associated *csi-SSB-ResourceList* in the corresponding *CSI-SSB-ResourceSet.*

<omitted text>

**5.2.1.5 Triggering/activation of CSI Reports and CSI-RS**

**5.2.1.5.1 Aperiodic CSI Reporting/Aperiodic CSI-RS when the triggering PDCCH and the CSI-RS have the same numerology**

For CSI-RS resource sets associated with Resource Settings configured with the higher layer parameter *resourceType* set to 'aperiodic', 'periodic', or 'semi-persistent', trigger states for Reporting Setting(s) (configured with the higher layer parameter *reportConfigType* set to 'aperiodic') and/or Resource Setting for channel and/or interference measurement on one or more component carriers are configured using the higher layer parameter *CSI-Aperiodic-TriggerStateList.* For a reporting setting for which the *CSI-ReportConfig* contains a list of sub-configurations provided by the higher layer parameter *[csi-ReportSubConfigList],* one or more trigger states can be configured with each indicating one or more of the sub-configurations. For aperiodic CSI report triggering, a single set of CSI triggering states are higher layer configured, wherein the CSI triggering states can be associated with any candidate DL BWP. A UE is not expected to receive more than one DCI with non-zero *CSI request* field per slot per cell. A UE is not expected to receive DCI with non-zero *CSI request* field within a cell group in a slot overlapping with any slot receiving DCI with non-zero *CSI request* field in the same cell group. A UE is not expected to be configured with different *TCI-StateId's* for the same aperiodic CSI-RS resource ID configured in multiple aperiodic CSI-RS resource sets with the same triggering offset in the same aperiodic trigger state. A UE is not expected to receive more than one aperiodic CSI report request for transmission in a given slot per cell. A UE is not expected to receive an aperiodic CSI report request for transmission in a slot overlapping with any slot having an aperiodic CSI report transmission in the same cell group. If a UE does not indicate its capability of *CSItriggerStateContainingNonactiveBWP* the UE is not expected to be triggered with a CSI report for a non-active DL BWP. Otherwise, when a UE is triggered with a CSI report for

a DL BWP that is non-active when expecting to receive the most recent occasion, no later than the CSI reference resource, of the associated NZP CSI-RS, the UE is not expected to report the CSI for the non-active DL BWP and the CSI report associated with that BWP is omitted. When a UE is triggered with aperiodic NZP CSI-RS in a DL BWP that is non-active when expecting to receive the NZP CSI-RS, the UE is not expected to measure the aperiodic CSI-RS. In the carrier of the serving cell expecting to receive that associated NZP CSI-RS, if the active DL BWP when receiving the NZP CSI-RS is different from the active DL BWP when receiving the triggering DCI,

- the last symbol of the PDCCH span of the DCI carrying the BWP switching shall be no later than the last symbol of the PDCCH span of the DCI carrying the CSI trigger, irrespective of whether they are in the same carrier of a serving cell or not and irrespective of whether they are in the same SCS or not;

- the UE is not expected to have any other BWP switching in that carrier after the last symbol of the PDCCH span covering the DCI carrying the CSI trigger and before the first symbol of the triggered NZP CSI-RS or CSI-IM.

(continued)

> - when the PDCCH reception includes two PDCCH candidates from two respective search space sets, as described in clause 10.1 of [6, TS 38.213], the span that involves the PDCCH candidate that ends later in time is used.
>
> <omitted text>
>
> **5.2.1.5.2 Semi-persistent CSI/Semi-persistent CSI-RS**
>
> For semi-persistent reporting on PUSCH, a set of trigger states are higher layer configured by *CSI-SemiPersistentOnPUSCH-TriggerStateList,* where the CSI request field in DCI scrambled with SP-CSI-RNTI activates one of the trigger states. For a reporting setting for which the *CSI-ReportConfig* contains a list of sub-configurations, provided by the higher layer parameter *[csi-ReportSubConfigList],* one or more trigger states can be configured with each indicating one or more of the sub-configurations. A UE is not expected to receive a DCI scrambled with SP-CSI-RNTI activating one semi-persistent CSI report with the same *CSI-ReportConfigId* as in a semi-persistent CSI report which is activated by a previously received DCI scrambled with SP-CSI-RNTI.
>
> For semi-persistent reporting on PUCCH, the PUCCH resource used for transmitting the CSI report are configured by *reportConfigType.* Semi-persistent reporting on PUCCH is activated by an activation command as described in clause 6.1.3.16 of [10, TS 38.321], which selects one of the semi-persistent Reporting Settings for use by the UE on the PUCCH. For a selected reporting setting for which the *CSI-ReportConfig* contains a list of sub-configurations provided by the higher layer parameter *[csi-ReportSubConfigList],* [an/the] activation command can [also] select one or more sub-configurations to use by the UE as described in clause 6.1.3.X of [10, TS 38.321]. When the UE would transmit a PUCCH with HARQ-ACK information in slot n corresponding to the PDSCH carrying the activation command, the indicated semi-persistent Reporting Setting should be applied starting from the first slot that is after slot $n+3N_{slot}^{subframe,u}$ where $\mu$ is the SCS configuration for the PUCCH.

As shown in Table 6 above, one or more sub-configurations may be configured within one CSI reporting setting, and one or a combination of the following configurations may be configured within each sub-configuration.

- List of IDs of one or more CSI-RS resource(s).
- Antenna port subset indication configured using a bitmap (i.e., indication of antenna port subsets to be activated)
- Additional power offset delta from EPRE offset between PDSCH and CSI-RS configured in CSI-RS resource configuration
- CSI codebook

For example, when a list of sub-configuration(s) is provided via a CSI report configuration, at least one of the following parameters may be configured for each sub-configuration: (i) a CSI codebook, (ii) a bitmap for enablement of a CSI-RS antenna port subset, (iii) a CSI-RS resource subset, and/or (v) a power offset delta.

For example, according to the sub-configuration configuration Method #1, a first sub-configuration among the CSI report configuration may include a parameter set {first CSI codebook, a first CSI-RS antenna port subset, a first power offset delta}, and a second sub-configuration may include a parameter set {second CSI codebook, a second CSI-RS antenna port subset, a second power offset delta}. In this case, each sub-configuration may be related with all CSI-RS resources of the corresponding CSI report configuration.

For example, according to the sub-configuration configuration Method #2, a first sub-configuration among the CSI report configuration may include a parameter set {first CSI-RS resource subset, first power offset delta}, and a second sub-configuration may include a parameter set {second CSI-RS resource subset, second power offset delta}. The first CSI-RS resource subset and the second CSI-RS resource subset may each be selected from among the CSI-RS resources included in the CSI report configuration.

For convenience, a CSI report configuration that includes a sub-configuration with a list of IDs of one or more CSI-RS resource(s) is called type 2 spatial domain (SD) adaptation, a CSI report configuration that includes a sub-configuration with an antenna port subset indication configured using a bitmap is called type 1 SD adaptation, and a CSI report configuration that includes a sub-configuration with an additional power offset delta value is called power domain (PD) adaptation. A list of IDs of one or more CSI-RS resource(s) and/or power offset delta values may be configured for sub-configuration(s) belonging to one CSI report configuration, which is called type 2 SD + PD adaptation, and a bitmap-based antenna port subset indication and/or power offset delta value may be configured for sub-configuration(s) belonging to one CSI report configuration, which is called type 1 SD + PD adaptation. In case of type 1 SD or PD or type 1 SD + PD adaptation, each CSI-RS resource may be related with all sub-configurations configured in one CSI report configuration, and in case of type 2 SD, each CSI-RS resource may be related with only a single sub-configuration among multiple sub-configurations in one CSI report configuration. For Type 2 SD + PD adaptation, list #1 of CSI-RS resource(s) configured in a sub-configuration within the same CSI report configuration and list #2 of CSI-RS resource(s) configured in another sub-configuration may be identical or disjoint.

When L sub-configurations are configured within one CSI report configuration, a UE may report CSI information corresponding to each of the L sub-configurations to a BS through one PUSCH/PUCCH. Among L sub-configurations, only N (N less than or equal to L and greater than or equal to 1) sub-configuration(s) may be activated or triggered through MAC-CE or DCI, and in this case, the UE may report CSI information corresponding to each of the N sub-configurations to the BS through one PUSCH/PUCCH. In detail, for a CSI report configuration in which semi-persistent CSI reporting on PUCCH is configured, N sub-configuration(s) among L sub-configurations configured through MAC-CE may be activated, and for a CSI report configuration in which semi-persistent CSI reporting on PUSCH or aperiodic CSI reporting is configured, N sub-configuration(s) among L sub-configurations configured through DCI may be triggered.

For a UE to calculate/report CSI information corresponding to one or more sub-configuration(s) for one CSI report, a CSI measurement method and a CSI-RS resource/port counting method that take into account the implementation complexity of the UE may be proposed.

**[Proposal #1] Counting the number of CSI-RS resources and/or ports when a single CSI-RS resource is to be associated with multiple sub-configurations**

The counting method in the existing NR specification is defined as follows:
"If a CSI-RS resource is referred N times by one or more CSI Reporting Settings, the CSI-RS resource and the CSI-RS ports within the CSI-RS resource are counted N times"

That is, when multiple CSI reporting settings are associated with one CSI-RS resource, the number of CSI-RS resources and ports is counted as the number of CSI reporting settings. An object of counting as such is that, a UE implementation is not capable of storing more than a certain number of resources/ports in memory when storing CSI-RS, and thus a BS is capable of reporting the number of resources/ports by the UE capability and configure the CSI reporting setting such that the number of resources/ports does not exceed the UE capability based on the counting rule described above.

As a CSI framework is enhanced for NES, multiple sub-configurations may be configured within a single CSI reporting setting, and the same CSI-RS resource may be associated with each sub-configuration. Therefore, it became necessary to define a CSI-RS resource/port counting method for these cases.

First, a CSI-RS resource counting method is proposed. When one CSI-RS resource is configured for X CSI reporting settings, and the number of sub-configurations associated with the corresponding CSI-RS resource within each CSI reporting setting is defined as N(k), CSI-RS resource counting may be defined as N(1)+N(2)+...+N(X). Here, N(1) means the number of sub-configurations associated with the corresponding CSI-RS resource in the first CSI-RS reporting setting (in which the CSI-RS resource is configured), and N(X) means the number of sub-configurations associated with the corresponding CSI-RS resource in the Xth CSI-RS reporting setting (in which the corresponding CSI-RS resource is configured). When there is no sub-configuration configured for a kth CSI-RS reporting setting, the corresponding N(k) value means 1. In detail, N(k), i.e., the number of sub-configurations associated with the CSI-RS resource, may be determined by applying one or a combination of the following Alts depending on the UE capability, CSI reporting type (e.g., P/SP/AP CSI reporting), or CSI-RS resource type (e.g., P/SP/AP CSI-RS resource).

- Alt-1: Even when multiple sub-configurations are configured or activated for the kth CSI reporting setting (i.e., CSI-ReportConfig), N(k) is always considered 1.
- Alt-2: When multiple (i.e., L) sub-configurations are configured for the kth CSI reporting setting (regardless of how many of the L are actually activated/triggered), N(k) is always considered as L.
- Alt-3: Even when multiple (i.e., L) sub-configurations are configured for the kth CSI reporting setting, when N out of L are actually activated/triggered through MAC-CE or DCI, N(k) is considered as N.
- Alt-4: For the above Alt-2 or Alt-3 or Alt-5 or Alt-6, when there are sub-configurations in which only a power offset (between CSI-RS and PDSCH) is configured differently for the same CSI-RS resource, those sub-configurations are counted as 1. For example, for the configured CSI reporting setting, when Alt-2 is applied, N(k)=4, but in reality, sub-configurations #1 and #2 differ only in power offset, and sub-configurations #3 and #4 also differ only in power offset, and thus in this case, N(k)=2 may be counted. As another example, when only sub-configuration #1/2 are activated and Alt-3 is applied, N(k)=2, but in reality, sub-configuration #1 and #2 differ only in power offset, and thus in this case, N(k)=1 may be counted.
- Alt-5: Multiple (i.e., L) sub-configurations are configured for the k-th CSI reporting setting (especially for SP-CSI reporting on PUSCH or AP-CSI reporting), and only some (M) of L may be activated via DCI. For example, CSI reporting settings associated with each code-point of the CSI request field in DCI and (when multiple sub-configurations are configured for the corresponding CSI reporting setting) sub-configuration(s) may be configured/indicated in advance, and the UE may feedback CSI information corresponding to the CSI reporting settings and sub-configuration(s) associated with the indicated code-point to the BS through the UL channel (e.g., PUSCH). In this case, the maximum number of sub-configurations among all code-points of the CSI request field associated with the kth CSI reporting setting may be counted as the N(k) value. For example, when the code-points of the CSI request field associated with the kth CSI reporting setting in which a total of 4 sub-configurations are configured are '001', '110', and '111', '001' is associated with 2 sub-configurations in the kth CSI reporting setting, '110' is associated with 1 sub-configuration in the kth CSI reporting setting, and '111' is associated with 3 sub-configurations in the kth CSI reporting setting, the corresponding N(k) value may be determined as 3. That is, even when 4 sub-configurations are configured, the maximum number of sub-configurations to be triggered through DCI is 3, and thus only the number of CSI-RS resources corresponding to this may be counted. In the corresponding example, it is assumed that all four sub-configurations are associated with the CSI-RS resource, especially in type 1 SD and/or PD and/or type 1 + PD adaptation. The same method may be extensively applied to Type 2 SD or Type 2 SD + PD adaptation. For example, when CSI-RS resource ID#1 is associated only with sub-configuration #0/1 among the four sub-configurations, the code-points of the CSI request field associated with the kth CSI reporting setting in which a total of four sub-configurations are configured are '001', '110', and '111', '001' is associated with two sub-configurations (e.g., sub-configuration #0/2) within the kth CSI reporting setting, '110' is associated with one sub-configuration (e.g., sub-configuration #2) within the kth CSI reporting setting, and '111' is associated with three sub-configurations (e.g., sub-configuration #0/1/2) within the kth CSI reporting setting, the corresponding N(k) value may be determined as 2. That is, even when 4 sub-configurations are configured, the maximum number of sub-configurations to be triggered through DCI and associated with the corresponding CSI-RS resource ID#1 is 2 (i.e., when the code-point of the CSI request field is '111', it is associated with sub-configuration #0/1), and thus only the number of CSI-RS resources corresponding to this may be counted. The corresponding method may be applied only to P-CSI-RS resources and/or SP-CSI-RS resources (associated with AP-CSI reporting and/or SP-CSI reporting on PUSCH).

- Alt-6: Multiple (i.e., L) sub-configurations may be configured for the k-th CSI reporting setting, only N of the L sub-configurations may be triggered via DCI (especially for SP-CSI reporting on PUSCH or AP-CSI reporting), and only N of the L sub-configurations may be activated via MAC-CE (especially for SP-CSI reporting on PUCCH). When a particular UE reports capability signaling that the UE supports only up to M sub-configurations to be activated/-triggered, only the maximum number of CSI-RS resources assuming M may be considered as N(k). For example, in case of type 1 SD and/or PD and/or type 1 + PD adaptation, for the kth CSI reporting setting in which a total of 4 sub-configurations are configured, the min(M, "the number of sub-configurations associated with the corresponding CSI-RS resource (i.e., 4)" value may be determined as N(k). When M=2, even when 4 sub-configurations are configured, the maximum number of sub-configurations to be activated and/or triggered through MAC-CE and/or DCI is M=2, and thus only the number of CSI-RS resources corresponding to this may be counted. The same method may be extensively applied to Type 2 SD or Type 2 SD + PD adaptation. For example, when CSI-RS resource ID#1 is associated only with sub-configuration #0/1 among a total of 4 sub-configurations, the min(M, "number of sub-configurations associated with the corresponding CSI-RS resource (i.e., 2)" value may be determined as N(k) for the corresponding CSI reporting setting. The corresponding method may be applied only to P-CSI-RS resources and/or SP-CSI-RS resources (associated with AP-CSI reporting and/or SP-CSI reporting on PUSCH/PUCCH).
- Alt-7: When a specific CSI-RS resource is called through M sub-configuration(s) among X sub-configuration(s) belonging to one CSI reporting, as shown in Table B below, the corresponding CSI-RS resource may be counted M times. In this case, X may mean the number of sub-configurations configured for the corresponding CSI reporting for P/SP-CSI-RS, and may mean the number of sub-configurations activated through DCI among the sub-configuration(s) configured for the corresponding CSI reporting for AP-CSI-RS.

According to an embodiment, one of the above Alts may be determined depending on the UE capability.

Then, a method of counting the number of ports of CSI-RS resources is proposed. When one CSI-RS resource is configured for X CSI reporting settings, and "the number of sub-configurations associated with the corresponding CSI-RS resource within each CSI reporting setting" x "the number of ports configured in the corresponding CSI-RS resource configuration" is defined as N(k), the number of ports of the CSI-RS resource counting may be defined as N(1)+N(2)+...+N(X). Here, N(1) means the product of "the number of sub-configurations associated with the corresponding CSI-RS resource in the first CSI-RS reporting setting (in which the CSI-RS resource is configured)" and "the number of ports configured in the CSI-RS resource configuration," and N(X) means the product of "the number of sub-configurations associated with the CSI-RS resource in the Xth CSI-RS reporting setting (in which the CSI-RS resource is configured)" and "the number of ports configured in the CSI-RS resource configuration." When there is no sub-configuration configured for the kth CSI-RS reporting setting, the corresponding N(k) value means "the number of ports configured in the corresponding CSI-RS resource configuration." In detail, N(k), i.e., the number of sub-configurations associated with the CSI-RS resource, may be determined by applying one or a combination of the following Alts depending on the UE capability, CSI reporting type (e.g., P/SP/AP CSI reporting), or CSI-RS resource type (e.g., P/SP/AP CSI-RS resource).

- Alt-A: Even when multiple sub-configurations are configured or activated for the kth CSI reporting setting (i.e., CSI-ReportConfig), N(k) is always considered as "the number of ports configured in the corresponding CSI-RS resource configuration".

- Alt-B: When multiple (i.e., L) sub-configurations are configured for the kth CSI reporting setting (regardless of how many of the L are actually activated/triggered), N(k) is always considered as the product of L and the "number of ports configured in the corresponding CSI-RS resource configuration".
- Alt-C: Even when multiple (i.e., L) sub-configurations are configured for the kth CSI reporting setting, when N out of L are actually activated/triggered through MAC-CE or DCI, N(k) is considered as the product of N and "the number of ports configured in the corresponding CSI-RS resource configuration".
- Alt-D: For Alt-B or Alt-C above, when there are sub-configurations in which only the power offset (between CSI-RS and PDSCH) is configured differently for the same CSI-RS resource, the corresponding sub-configurations may be considered as one sub-configuration. For example, for the configured CSI reporting setting, when Alt-B is applied, N(k)=4*16, but in reality, sub-configurations #1 and #2 differ only in power offset, and sub-configurations #3 and #4 also differ only in power offset, and thus in this case, N(k)=2*16 may be counted. As another example, when only sub-configuration #1/2 are activated and Alt-C is applied, N(k)=2*16, but in reality, sub-configuration #1 and #2 differ only in power offset, and thus in this case, N(k)=16 may be counted.
- Alt-E: When applying Alt-B or Alt-C or Alt-D or Alt-F above, if port subset indication information (i.e. bitmap information for port on/off) is configured for a specific sub-configuration, such as in type 1 SD or type 1 SD + PD adaptation, the number of ports configured in the corresponding CSI-RS resource configuration may be replaced with the number of ports turned on in the corresponding bitmap information. For example, for the configured CSI reporting setting, when Alt-B is applied, N(k)=4*16, but for sub-configuration #3 and #4, bitmap information is configured to signal that only 8 ports are on, and thus in this case, N(k)=2*16+2*8 may be counted. As another example, when only sub-configuration #1/3 are activated and Alt-C is applied, N(k)=2*16, but in reality, sub-configuration #3 has bitmap information configured to signal that only 8 ports are on, and thus in this case, N(k)=16+8 may be counted.
- Alt-F: Multiple (i.e., L) sub-configurations are configured for the k-th CSI reporting setting (especially for SP-CSI reporting on PUSCH or AP-CSI reporting), and only some (M) of L may be activated via DCI. For example, CSI reporting settings associated with each code-point of the CSI request field in DCI and (when multiple sub-configurations are configured for the corresponding CSI reporting setting) sub-configuration(s) may be configured/indicated in advance, and the UE may feedback CSI information corresponding to the CSI reporting settings and sub-configuration(s) associated with the indicated code-point to the BS through the UL channel (e.g., PUSCH). In this case, N(k) may be considered as the product of the "maximum number of sub-configurations" and the "number of ports configured in the corresponding CSI-RS resource configuration" among all code-points of the CSI request field associated with the kth CSI reporting setting, or N(k) may be considered as the maximum value of the "sum of the number of ports in the on state configured in the sub-configuration(s) associated with each code-point (or the sum of the number of antenna ports signaled as '1' in the bitmap)" (and the number of ports configured in the corresponding CSI-RS resource configuration). For example, when the code-points of the CSI request field associated with the kth CSI reporting setting configured with a 16-port CSI-RS resource and a total of 4 sub-configurations (it is signaled, through an antenna port subset indication or bitmap, that sub-configuration#0 has all 16 antenna ports turned on, sub-configuration#1 has only 8 antenna ports turned on, sub-configuration#2 has only 4 antenna ports turned on, and sub-configuration#3 has only 2 antenna ports turned on) are '001', '110', and '111', '001' is associated with 2 sub-configurations (e.g., sub-configuration#1/3) within the kth CSI reporting setting, '110' is associated with 1 sub-configuration (e.g., sub-configuration#0) within the kth CSI reporting setting, and '111' is associated with to 3 sub-configurations (e.g., sub-configuration#1/2/3) within the kth CSI reporting setting , the corresponding N(k) value may be determined as 3*16. That is, even when 4 sub-configurations are configured, the maximum number of sub-configurations to be triggered through DCI is 3, and thus only the number of CSI-RS resource ports corresponding to this may be counted. As another example, when N(k) is considered as the maximum value of "the sum of the number of ports in an on state configured in the associated sub-configuration(s) for each code-point (or the sum of the number of antenna ports signaled as '1' in the bitmap)" among all code-points of the associated CSI request field (and the number of ports configured in the corresponding CSI-RS resource configuration), the corresponding N(k) value may be determined as max{8+2, 16, 8+4+2}=16. When the value determined through the corresponding Expression of max is less than the number of ports configured in the CSI-RS resource configuration, the final N(k) value may be determined as the number of ports configured in the CSI-RS resource configuration. In the corresponding example, it is assumed that all four sub-configurations are associated with the CSI-RS resource, especially in type 1 SD and/or PD and/or type 1 + PD adaptation. The same method may be extensively applied to Type 2 SD or Type 2 SD + PD adaptation. For example, when 16-port CSI-RS resource ID#1 is associated only with sub-configuration #0/1 among the four sub-configurations, the code-points of the CSI request field associated with the kth CSI reporting setting in which a total of four sub-configurations are configured are '001', '110', and '111', '001' is associated with two sub-configurations (e.g., sub-configuration #0/2) within the kth CSI reporting setting, '110' is associated with one sub-configuration (e.g., sub-configuration #2) within the kth CSI reporting setting, and '111' is associated with three sub-configurations (e.g., sub-configuration #0/1/2) within the kth CSI reporting setting, the corresponding N(k) value may be determined as 16*2=32. That is, even when 4 sub-configurations are configured, the maximum number of sub-configurations to be triggered through DCI and associated with the corresponding CSI-RS resource ID#1 is 2 (i.e., when the code-point of the CSI request field is '111', it is associated with sub-configuration #0/1), and thus only the product of the number of corresponding CSI-RS resources and the number of antenna ports may be counted. The corresponding method may be applied only to P-CSI-RS resources and/or SP-CSI-RS resources (associated with AP-CSI reporting and/or SP-CSI reporting on PUSCH).

- Alt-G: Multiple (i.e., L) sub-configurations may be configured for the k-th CSI reporting setting, only N of the L sub-configurations may be triggered via DCI (especially for SP-CSI reporting on PUSCH or AP-CSI reporting), and only N of the L sub-configurations may be activated via MAC-CE (especially for SP-CSI reporting on PUCCH). When a particular UE reports capability signaling that the UE supports only up to M sub-configurations to be activated/-triggered, only the maximum number of CSI-RS ports assuming M may be considered as N(k). For example, for type 1 SD and/or PD and/or type 1 SD + PD adaptation, the kth CSI reporting setting configured with a 16-port CSI-RS resource and a total of 4 sub-configurations (it is signaled, through an antenna port subset indication or bitmap, that sub-configuration#0 has all 16 antenna ports turned on, sub-configuration#1 has only 8 antenna ports turned on, sub-configuration#2 has only 4 antenna ports turned on, and sub-configuration#3 has only 2 antenna ports turned on) may be assumed. For the kth CSI reporting setting in which a total of 4 sub-configurations are configured, the maximum value among the sums of the numbers of antenna ports associated with the min(M, "the number of sub-configurations associated with the corresponding CSI-RS resource (i.e., 4)" sub-configurations may be determined as N(k). When M=2, even when 4 sub-configurations are configured, the maximum number of sub-configurations to be activated and/or triggered through MAC-CE and/or DCI is M=2, and thus only the maximum number of CSI-RS ports that may correspond to this, which is 16+8=24, may be counted. When the corresponding result value is less than the number of antenna ports configured in the CSI-RS resource, N(k) may be finally determined as the number of antenna ports configured in the CSI-RS resource. The same method may be extensively applied to the corresponding Type 2 SD or Type 2 SD + PD adaptation. For example, when CSI-RS resource ID#1 is associated only with sub-configuration #0/1 among a total of 4 sub-configurations, the product of the min(M, "number of sub-configurations associated with the corresponding CSI-RS resource (i.e., 2)" value and the antenna port configured for the corresponding CSI-RS resource may be determined as N(k) for the corresponding CSI reporting setting. When the corresponding result value is less than the number of antenna ports configured in the CSI-RS resource, N(k) may be finally determined as the number of antenna ports configured in the CSI-RS resource. The corresponding method may be applied only to P-CSI-RS resources and/or SP-CSI-RS resources (associated with AP-CSI reporting and/or SP-CSI reporting on PUSCH/PUCCH).

- Alt-H: When a specific CSI-RS resource is called through M sub-configuration(s) among X sub-configuration(s) belonging to one CSI reporting, as shown in Table B below, the corresponding CSI-RS port may be counted differently depending on type 1 SD or type 2 SD or PD adaptation. In case of Type 1 SD adaptation (or when at least one sub-configuration is Type 1 SD or Type 1 SD + PD adaptation, or when at least one sub-configuration has a bitmap-based port subset indication configured), a CSI-RS port may be counted as many as a value determined according to Expression $\max(\Sigma_{s=1}^{M} P_s, P)$, and in this case, P represents the number of antenna ports configured for the CSI-RS resource, Ps represents the number of '1's (or the number of antenna ports configured to be on) in the bitmap signaling the port subset indication configured for the sub-configuration index s, and when the bitmap is not configured for the sub-configuration index s, Ps = P. In case of type 2 SD adaptation or PD adaptation or type 2 SD + PD adaptation (or when no bitmap-based port subset indication is configured for any sub-configuration or when a CSI-RS resource ID list is configured for at least one sub-configuration), the CSI-RS port may be counted as much as a value determined according to Expression of M x P, and in this case, P may mean the number of antenna ports configured for the CSI-RS resource. In this case, X may mean the number of sub-configurations configured for the corresponding CSI reporting for P/SP-CSI-RS, and may mean the number of sub-configurations activated through DCI among the sub-configuration(s) configured for the corresponding CSI reporting for AP-CSI-RS.

The text proposal to which Alt-6 and Alt-G above may be as shown in Table 7 below. For type 1 SD and/or PD and/or type 1 SD + PD adaptation, a configuration constraint is assumed such that the smaller the sub-configuration index value, the more antenna ports are enabled.

[Table 7]

| Reason for Change: |
|---|
| - For a periodic or semi-persistent CSI-RS resource configured with semi-persistent or aperiodic CSI reporting, the current CSI-RS resource/port counting rule is based on referred *M* sub-configurations among *L* configured sub-configurations. If a UE reports the maximum number (=*K*) of CSI sub-reports included in a CSI report |

(continued)

configuration (subject to UE capability) as the value smaller than M, the UE has to count unnecessarily large number of CSI-RS resource/port although more than K sub-configuraitons can not be activated/triggered.

**Summary of Change:**

- For a periodic or semi-persistent CSI-RS resource configured with semi-persistent or aperiodic CSI reporting, The CSI-RS resource is counted as minumum of *M* and *K*. The CSI-RS ports within the CSI-RS resource are counted $\max(\Sigma_{s=1}^{\min(M,K)} P_s, P)$ In order to guarantee that $\Sigma_{s=1}^{\min(M,K)} P_s$ results in the largest value that can be obtained by using any min(M,K) configurations, the number of antenna ports of the subset corresponding to n-th sub-configuration is not less than the number of antenna ports of the subset corresponding to (n+1)-th sub-configuration.

**Consequences if not approved:**

- The UE may count unnecessarily large number of CSI-RS resource/port although more than K sub-configuraitons can not be activated/triggered.

**5.2.1.4.2 Report quantity configurations**

<Omitted>

If the UE is configured with a *CSI-ReportConfig* that contains a list of sub-configurations, provided by *[csi-Report-SubConfigList]*:

- The UE expects to be configured with the higher layer parameter *codebookType* set to 'typeI-SinglePanel' or 'typeI-MultiPanel'. If the UE indicates a capability for supporting mixed codebook combination in a slot with [ABC], each sub-configuration can be configured with the higher layer parameter *codebookType* set to 'typeI-SinglePanel' or 'typeI-MultiPanel'. - Each sub-configuration can be configured with an antenna port subset using the higher layer bitmap parameter *[port-subsetIndicator]* which contains the bit sequence $p_0, p_1, ..., p_{Pm-1}$, where $p_0$ is the MSB and $p_{Pm-1}$ is the LSB, bit $p_i$ corresponds to antenna port 3000+i and Pm is the number of ports *nrofPorts* configured for the CSI-RS resources(s) within a *NZP-CSI-RS-ResourceSet* contained in the *CSI-ResourceConfig* for channel measurement that corresponds to the *CSI-ReportConfig.* A bit value 0 in *[port-subsetIndicator]* indicates that the corresponding antenna port is disabled for the sub-configuration, whereas bit value 1 indicates that the antenna port is enabled and belongs to the antenna port subset for the sub-configuration. For the derivation of PMI, antenna ports corresponding to all bits with value of 1 in [*port-subsetIndicator*] are mapped to consecutive antenna ports starting at CSI-RS antenna port 3000 in increasing order of the bit position in [*port-subsetIndicator*].

- If a sub-configuration is configured with an antenna port subset, then the sub-configuration can be configured with a [RI restriction parameter] and, if the number of antenna ports of the subset greater than 2, with [*n1-n2* parameter] if the higher layer parameter *codebookType* is set to 'typeI-SinglePanel' or with [*ng-n1-n2* parameter] if the higher layer parameter *codebookType* is set to 'typeI-MultiPanel', and, if the corresponding number of antenna ports of the subset is 2, with *twoTX-CodebookSubsetRestriction,* where the parameters [RI restriction], [*n1-n2*], [*ng-n1-n2*], *twoTX-CodebookSubsetRestriction* are as described in Clauses 5.2.2.2.1 and 5.2.2.2.2. If a sub-configuration is configured with an antenna port subset, and if higher layer parameter *reportQuantity* is set to 'cri-RI-i1-CQI', and if the higher layer parameter *codebookType* is set to 'typeI-SinglePanel', then the sub-configuration can be configured with higher layer parameter *typeI-SinglePanel-codebookSubsetRestriction-i2,* where *typeI-SinglePanel-codebookSubsetRestriction-i2* is as described in Clause 5.2.2.2.1.

- If a sub-configuration is configured with an antenna port subset, and if the *CSI-ReportConfig* that contains a mix of sub-configuration(s) each corresponding to 'typeI-SinglePanel' some other sub-configuration(s) each corresponding to 'typeI-MultiPanel', then the sub-configuration(s) can be configured with the higher layer parameter *codebookMode.*

- If a sub-configuration is configured with an antenna port subset, the number of antenna ports of the subset corresponding to n-th sub-configuration is not less than the number of antenna ports of the subset corresponding to (*n*+1)-th sub-configuration. <Omitted>

**5.2.1.6 CSI processing criteria**

(continued)

<Omitted>

For a *CSI-ReportConfig* containing a list of *L* sub-configuration(s) provided by higher layer parameter *csi-Report-SubConfigList,* if a CSI-RS resource is referred by *M* sub-configurations among *N* triggered sub-configurations for CSI reporting for aperiodic CSI-RS resource, or L configured sub-configurations for CSI reporting for periodic or semi-persistent CSI-RS resource, the CSI-RS resource is counted min(M, *K*) times and the CSI-RS ports within the CSI-RS resource are counted max($\Sigma_{s=1}^{\min(M,K)} P_s$,P), where K is the maximum number of CSI sub-reports included in one CSI report subject to UE capability if the CSI-RS resource is periodic or semi-persistent and configured for semi-persistent or aperiodic CSI reporting, otherwise K=M, P is the number of ports configured by *nrofPorts* and $P_s$ is the number of CSI-RS ports in s-th sub-configuration from *M* sub-configurations derived from the corresponding antenna port subset indicator [*port-subsetIndicator*] according to clause 5.2.1.4.2 if configured, otherwise $P_s$=P.

Alternatively, the text proposal to which Alt-6 and Alt-G above may be as shown in Table 8 below.

[Table 8]

**Reason for Change:**

- For a periodic or semi-persistent CSI-RS resource configured with semi-persistent or aperiodic CSI reporting, the current CSI-RS resource/port counting rule is based on referred *M* sub-configurations amoung *L* configured sub-configurations. If a UE reports the maximum number (=*K*) of CSI sub-reports included in a CSI report configuration (subject to UE capability) as the value smaller than M, the UE has to count unnecessarily large number of CSI-RS resource/port although more than K sub-configuraitons can not be activated/triggered.

**Summary of Change:**

- For a periodic or semi-persistent CSI-RS resource configured with semi-persistent or aperiodic CSI reporting, The CSI-RS resource is counted as minumum of *M* and *K.* The CSI-RS ports within the CSI-RS resource are counted max($P_{sum}$,P), where Psum is the total number of CSI-RS ports in the min(M, K) sub-configurations resulting with the largest $P_{sum}$ value among M sub-configurations

**Consequences if not approved:**

- The UE may count unnecessarily large number of CSI-RS resource/port although more than K sub-configuraitons can not be activated/triggered.

**5.2.1.6 CSI processing criteria**

<Omitted>

For a CSI-ReportConfig containing a list of L sub-configuration(s) provided by higher layer parameter csi-Report-SubConfigList, if a CSI-RS resource is referred by M sub-configurations among N triggered sub-configurations for CSI reporting for aperiodic CSI-RS resource, or L configured sub-configurations for CSI reporting for periodic or semi-persistent CSI-RS resource, the CSI-RS resource is counted min(M, K) times and the CSI-RS ports within the CSI-RS resource are counted max($P_{sum}$,P), where $P_{sum}$ is the total number of Ps in the min(M, K) sub-configurations resulting with the largest $P_{sum}$ value among M sub-configurations, K is the maximum number of CSI sub-reports included in one CSI report subject to UE capability if the CSI-RS resource is periodic or semi-persistent and configured for semi-persistent or aperiodic CSI reporting, otherwise K=M, P is the number of ports configured by nrofPorts and $P_s$ is the number of CSI-RS ports in s-th sub-configuration from M sub-configurations derived from the corresponding antenna port subset indicator [port-subsetIndicator] according to clause 5.2.1.4.2 if configured, otherwise $P_s$=P.

Table 9 shows an excerpt of items to be applied to the 3GPP TS38.214 document according to the agreement reached in recent NR standardization discussions (R1-2308743).

[Table 9]

**5.2.1.6 CSI processing criteria**

(continued)

The UE indicates the number of supported simultaneous CSI calculations $N_{CPU}$ with parameter simultaneousCSI-ReportsPerCC in a component carrier, and simultaneousCSI-ReportsAllCC across all component carriers. If a UE supports $N_{CPU}$ simultaneous CSI calculations it is said to have $N_{CPU}$ CSI processing units for processing CSI reports. If L CPUs are occupied for calculation of CSI reports in a given OFDM symbol, the UE has $N_{CPU}$-L unoccupied CPUs. If N CSI reports start occupying their respective CPUs on the same OFDM symbol on which $N_{CPU}$-L CPUs are unoccupied, where each CSI report n=0,...,N-1 corresponds to $O_{CPU}^{(n)}$, the UE is not required to update the N-M requested CSI reports with lowest priority (according to Clause 5.2.5), where $0 \leq M \leq N$ is the largest value such that $\Sigma_{n=0}^{M-1} O_{CPU}^{(n)} \leq N_{CPU}$-L holds.

A UE is not expected to be configured with an aperiodic CSI trigger state containing more than $N_{CPU}$ Reporting Settings.

Processing of a CSI report occupies a number of CPUs for a number of symbols as follows:

- $O_{CPU}$=0 for a CSI report with CSI-ReportConfig with higher layer parameter reportQuantity set to 'none' and CSI-RS-ResourceSet with higher layer parameter trs-Info configured

- $O_{CPU}$=1 for a CSI report with CSI-ReportConfig with higher layer parameter reportQuantity set to 'cri-RSRP', 'ssb-Index-RSRP', 'cri-SINR', 'ssb-Index-SINR', 'cri-RSRP- Index', 'ssb-Index-RSRP- Index', 'cri-SINR- Index', 'ssb-Index-SINR- Index ' or 'none' (and CSI-RS-ResourceSet with higher layer parameter trs-Info not configured)

- for a CSI report with CSI-ReportConfig with higher layer parameter reportQuantity set to 'cri-RI-PMI-CQI', 'cri-RI-i1', 'cri-RI-i1-CQI', 'cri-RI-CQI', or 'cri-RI-LI-PMI-CQI',

- if max{ $\mu$PDCCH, $\mu$CSI-RS, $\mu$UL} $\leq$ 3, and if a CSI report is aperiodically triggered without transmitting a PUSCH with either transport block or HARQ-ACK or both when L = 0 CPUs are occupied, where the CSI corresponds to a single CSI with wideband frequency-granularity and to at most 4 CSI-RS ports in a single resource without CRI report and where codebookType is set to 'typel-SinglePanel' or where reportQuantity is set to 'cri-RI-CQI', $O_{CPU}$=$N_{CPU}$,

- If a CSI-ReportConfig is configured with codebookType set to 'typel-SinglePanel' and the corresponding CSI-RS Resource Set for channel measurement is configured with two Resource Groups and N Resource Pairs, $O_{CPU}$=X·N+M, where X is the number of CPUs occupied by a pair of CMRs subject to mTRP-CSI-numCPU-r17 and M is defined in clause 5.2.1.4.2..

- If a CSI-ReportConfig contains a list of L sub-configurations provided by the higher layer parameter [csi-Report-SubConfigList],

- $O_{CPU}\Sigma_{i=1}^{L}K_s^i$, for periodic CSI reporting, where $K_s^i$ is the total number of CSI-RS resources corresponding to the i-th sub-configuration.

- $O_{CPU}$=$\Sigma_{i=1}^{N}K_s^i$ for aperiodic and semi-persistent CSI reporting, where $K_s^i$ is the total number of CSI-RS resources corresponding to the i-th sub-configuration, and where the i-th sub-configuration is from N indicated sub-configurations out of *L* sub-configurations contained in a *CSI-ReportConfig,* where $N \leq L$ and $N \geq 1$.

- otherwise, $O_{CPU}$=$K_s$, where $K_s$ is the number of CSI-RS resources in the CSI-RS resource set for channel measurement.

For a CSI report with *CSI-ReportConfig* with higher layer parameter *reportQuantity* not set to 'none', the CPU(s) are occupied for a number of OFDM symbols as follows:

- A periodic or semi-persistent CSI report (excluding an initial semi-persistent CSI report on PUSCH after the PDCCH triggering the report) occupies CPU(s) from the first symbol of the earliest one of each CSI-RS/CSI-IM/SSB resource for

channel or interference measurement, respective latest CSI-RS/CSI-IM/SSB occasion no later than the corresponding CSI reference resource, until the last symbol of the configured PUSCH/PUCCH carrying the report.

- An aperiodic CSI report occupies CPU(s) from the first symbol after the PDCCH triggering the CSI report until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used.

- An initial semi-persistent CSI report on PUSCH after the PDCCH trigger occupies CPU(s) from the first symbol after the PDCCH until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used.

(continued)

For a CSI report with *CSI-ReportConfig* with higher layer parameter *reportQuantity* set to 'none' and *CSI-RS-ResourceSet* with higher layer parameter *trs-Info* not configured, the CPU(s) are occupied for a number of OFDM symbols as follows: - A semi-persistent CSI report (excluding an initial semi-persistent CSI report on PUSCH after the PDCCH triggering the report) occupies CPU(s) from the first symbol of the earliest one of each transmission occasion of periodic or semi-persistent CSI-RS/SSB resource for channel measurement for L1-RSRP computation, until $Z_3$'symbols after the last symbol of the latest one of the CSI-RS/SSB resource for channel measurement for L1-RSRP computation in each transmission occasion.

- An aperiodic CSI report occupies CPU(s) from the first symbol after the PDCCH triggering the CSI report until the last symbol between $Z_3$ symbols after the first symbol after the PDCCH triggering the CSI report and $Z_3$' symbols after the last symbol of the latest one of each CSI-RS/SSB resource for channel measurement for L1-RSRP computation. where $(Z_3,Z_3')$ are defined in the table 5.4-2.

In any slot, the UE is not expected to have more active CSI-RS ports or active CSI-RS resources in active BWPs than reported as capability. NZP CSI-RS resource is active in a duration of time defined as follows. For aperiodic CSI-RS, starting from the end of the PDCCH containing the request and ending at the end of the scheduled PUSCH containing the report associated with this aperiodic CSI-RS. When the PDCCH candidates are associated with a search space set configured with *searchSpaceLinking,* for the purpose of determining the NZP CSI-RS resource active duration, the PDCCH candidate that ends later in time among the two linked PDCCH candidates is used. For semi-persistent CSI-RS, starting from the end of when the activation command is applied, and ending at the end of when the deactivation command is applied. For periodic CSI-RS, starting when the periodic CSI-RS is configured by higher layer signalling, and ending when the periodic CSI-RS configuration is released. If a CSI-RS resource is referred N times by one or more CSI Reporting Settings, the CSI-RS resource and the CSI-RS ports within the CSI-RS resource are counted *N* times. For a CSI-RS Resource Set for channel measurement configured with two Resource Groups and N Resource Pairs, if a CSI-RS resource is referred X times by one of the M CSI-RS resources, where M is defined in clause 5.2.1.4.2, and/or one or two Resource Pairs, the CSI-RS resource and the CSI-RS ports within the CSI-RS resource are counted X times.

For a CSI report configuration containing sub-configuration(s) indicated in a *CSI-ReportConfig,* if a CSI-RS resource is referred by *M* sub-configurations among *X* sub-configurations, the CSI-RS resource is counted *M* times and the CSI-RS ports within the CSI-RS resource are counted as follows:

- $\max(\Sigma_{s=1}^{M} P_s, P)$ if each sub-configuration, of the M sub-configurations, is configured with a CSI-RS antenna port subset, provided by [*port-subsetIndicator*],

- $M \times P$ if each sub-configuration, of the *M* sub-configurations, is configured with a list of one or more CSI-RS resources, provided by [*nzp-CSI-RS-resourceList*], [and/] or is configured with a power offset, provided by *[powerOffset]*

Where P is the number of ports configured by *nrofPorts* and $P_s$ is the number of CSI-RS ports in sub-configuration s derived from the corresponding antenna port subset indicator [*port-subsetIndicator*] according to clause 5.2.1.4.2.

The UE may report the number of CSI-RS resources to be simultaneously configured for the CC/BWP or the entire CC/BWP as Y. When CSI-RS resources corresponding to one CSI-RS resource are determined to be counted K times (for a CSI reporting setting configured with one or more sub-configurations) by utilizing one or a combination of Alts above, if K is greater than Y, the UE may expect that the corresponding CSI-RS resource is counted only Y times and that only some of the sub-configurations(es) including the corresponding CSI-RS resource are triggered/activated via DCI/MAC-CE, and the like such that the CSI-RS resource is counted at most Y times at a specific point in time. The proposal may be applied to CSI-RS resources associated with SP-CSI and/or AP-CSI reporting.

Alternatively, the UE may report the number of antenna ports for CSI-RS resource(s) to be simultaneously configured for the CC/BWP or the entire CC/BWP as Y. When antenna ports corresponding to one CSI-RS resource are determined to be counted K times (for a CSI reporting setting configured with one or more sub-configurations) by utilizing one or a combination of Alts above, if K is greater than Y, the UE may expect that the antenna ports for the corresponding CSI-RS resource are counted only Y times and that only some of the sub-configurations(es) including the corresponding CSI-RS resource are triggered/activated via DCI/MAC-CE, and the like such that the number of the antenna port of the CSI-RS resource is counted at most Y times at a specific point in time. The proposal may be applied to CSI-RS resources associated with SP-CSI and/or AP-CSI reporting.

According to an embodiment, one of the above Alts may be determined depending on the UE capability.

**[Proposal #2] Method of checking CPU occupancy and CSI processing time for CSI reporting configured with one or more sub-configurations**

Table 10 shows an excerpt from Table 9 (R1-2308743).

[Table 10]

---

**5.2.1.6 CSI processing criteria**

The UE indicates the number of supported simultaneous CSI calculations $N_{CPU}$ with parameter simultaneousCSI-ReportsPerCC in a component carrier, and simultaneousCSI-ReportsAllCC across all component carriers. If a UE supports $N_{CPU}$ simultaneous CSI calculations it is said to have $N_{CPU}$ CSI processing units for processing CSI reports. If L CPUs are occupied for calculation of CSI reports in a given OFDM symbol, the UE has $N_{CPU}$-L unoccupied CPUs. If N CSI reports start occupying their respective CPUs on the same OFDM symbol on which $N_{CPU}$-L CPUs are unoccupied, where each CSI report n=0,...,N-1 corresponds to $O_{CPU}^{(n)}$, the UE is not required to update the N-M requested CSI reports with lowest priority (according to Clause 5.2.5), where $0 \leq M \leq N$ is the largest value such that $\Sigma_{n=0}^{M-1} O_{CPU}^{(n)} \leq N_{CPU}$-L holds.

A UE is not expected to be configured with an aperiodic CSI trigger state containing more than $N_{CPU}$ Reporting Settings. Processing of a CSI report occupies a number of CPUs for a number of symbols as follows:

- $O_{CPU}$=0 for a CSI report with CSI-ReportConfig with higher layer parameter reportQuantity set to 'none' and CSI-RS-ResourceSet with higher layer parameter trs-Info configured

- $O_{CPU}$=1 for a CSI report with CSI-ReportConfig with higher layer parameter reportQuantity set to 'cri-RSRP', 'ssb-Index-RSRP', 'cri-SINR', 'ssb-Index-SINR', 'cri-RSRP- Index', 'ssb-Index-RSRP- Index', 'cri-SINR- Index', 'ssb-Index-SINR- Index ' or 'none' (and CSI-RS-ResourceSet with higher layer parameter trs-Info not configured)

- for a CSI report with CSI-ReportConfig with higher layer parameter reportQuantity set to 'cri-RI-PMI-CQI', 'cri-RI-i1', 'cri-RI-i1-CQI', 'cri-RI-CQI', or 'cri-RI-LI-PMI-CQI',

- if max { $\mu$PDCCH, $\mu$CSI-RS, $\mu$UL} $\leq$ 3, and if a CSI report is aperiodically triggered without transmitting a PUSCH with either transport block or HARQ-ACK or both when L = 0 CPUs are occupied, where the CSI corresponds to a single CSI with wideband frequency-granularity and to at most 4 CSI-RS ports in a single resource without CRI report and

where codebookType is set to 'typeI-SinglePanel' or where reportQuantity is set to 'cri-RI-CQI', $O_{CPU}$=$N_{CPU}$, **(for convenience, referred to as "condition#1")**

- If a CSI-ReportConfig is configured with codebookType set to 'typeI-SinglePanel' and the corresponding CSI-RS Resource Set for channel measurement is configured with two Resource Groups and N Resource Pairs, $O_{CPU}$=X·N+M, where X is the number of CPUs occupied by a pair of CMRs subject to mTRP-CSI-numCPU-r17 and M is defined in clause 5.2.1.4.2.

- If a CSI-ReportConfig contains a list of L sub-configurations provided by the higher layer parameter [csi-Report-SubConfigList]**, (for convenience, referred to as "NES condition")**

- $O_{CPU}$=$\Sigma_{i=1}^{L} K_s^i$, for periodic CSI reporting, where $K_s^i$ is the total number of CSI-RS resources corresponding to the $i$-th sub-configuration.

- $O_{CPU}$=$\Sigma_{i=1}^{N} K_s^i$ for aperiodic and semi-persistent CSI reporting, where $K_s^i$ is the total number of CSI-RS resources corresponding to the $i$-th sub-configuration, and where the $i$-th sub-configuration is from $N$ indicated sub-configurations out of $L$ sub-configurations contained in a *CSI-ReportConfig*, where $N \leq L$ and $N \geq 1$.

- otherwise, $O_{CPU}$=$K_s$, where $K_s$ is the number of CSI-RS resources in the CSI-RS resource set for channel measurement.

---

Condition #1 in Table 10 above means that when a significant number of conditions are satisfied, such as {maximum SCS is 120 kHz SCS, aperiodic CSI on CSI-only PUSCH triggered by UL grant, L=0 CPU occupied, number of CSI-RS resources configured in CSI report is 1, number of antenna ports configured in the corresponding CSI-RS resource is at most 4, type-1 codebook or non-PMI configuration}, all CPUs are occupied. When more than one sub-configuration is configured for a single CSI reporting setting for NES purposes, it may be unclear whether the corresponding conditions are satisfied: {the number of CSI-RS resources configured for the CSI report is 1, and the number of antenna ports configured for the corresponding CSI-RS resource is at most 4}.

First, the following may be considered in determining whether "the number of CSI-RS resources configured in the CSI report is one" is satisfied.

- For Periodic CSI (P-CSI) reporting, the condition "the number of CSI-RS resources configured for the CSI report is one" may be considered satisfied only when the sum of the number of CSI-RS resources associated with each of the L sub-configurations configured for the corresponding CSI reporting setting, and the N sub-configurations activated/-triggered via MAC-CE/DCI for semi-persistent CSI (SP-CSI) or aperiodic CSI (AP-CSI) reporting is one. In detail, for type 1 SD or PD or type 1 SD + PD adaptation, only a single CSI-RS resource may be configured for CMR purposes within the corresponding CSI reporting setting, and only a single sub-configuration may be configured (for P-CSI reporting) or only a single sub-configuration may be activated/triggered (for SP-CSI reporting and/or AP-CSI reporting). Alternatively, for type 2 SD or type 2 SD + PD adaptation, only a single sub-configuration may be configured (for P-CSI reporting) or only a single sub-configuration may be activated/triggered (for SP-CSI reporting and/or AP-CSI reporting) and the number of CSI-RS resources associated with that sub-configuration may be limited to one.

Similarly, the following may be considered in determining whether "the number of antenna ports configured for the corresponding CSI-RS resource is at most 4" is satisfied.

-    For P-CSI reporting, the condition "the number of antenna ports configured for the corresponding CSI-RS resource is at most 4" may be considered satisfied only when the number of antenna ports associated with each of the L sub-configurations configured for the corresponding CSI reporting setting, and the N sub-configurations activated/triggered via MAC-CE/DCI for SP-CSI or AP-CSI reporting is at most 4. In detail, for type 1 SD or type 1 SD + PD adaptation, the number of antenna ports (if not configured, antenna ports configured in the associated CSI-RS resource) based on the port subset indication information configured for the configured sub-configuration (for P-CSI reporting) or activated/triggered sub-configuration(s) (for SP-CSI reporting and/or AP-CSI reporting) may be limited to 4 or less. Alternatively, for type 2 SD or PD or type 2 SD + PD adaptation, the number of antenna ports provided through the CSI-RS resource(s) configured in the corresponding CSI reporting setting may be limited to 4 or less.

Alternatively, when one or more sub-configurations are configured for one CSI reporting setting for NES purposes, condition #1 of Table 10 above may not always be satisfied and a constraint may be applied so that only the NES condition is satisfied.

Table 11 shows an excerpt from the existing NR standard document, TS 38.214 v17.6.0.

[Table 11]

### 5.2.1.6  CSI processing criteria

When the *CSI request* field on a DCI triggers a CSI report(s) on PUSCH, the UE shall provide a valid CSI report for the $n$-th triggered report,

- if the first uplink symbol to carry the corresponding CSI report(s) including the effect of the timing advance, starts no earlier than at symbol $Z_{ref}$, and

- if the first uplink symbol to carry the $n$-th CSI report including the effect of the timing advance, starts no earlier than at symbol $Z'_{ref}(n)$,

where $Z_{ref}$ is defined as the next uplink symbol with its CP starting $T_{proc,CSI}=(Z)(2048+144)\cdot\kappa 2^{-\mu}\cdot T_C+T_{switch}$ after the end of the last symbol of the PDCCH triggering the CSI report(s), and where $Z'_{ref}(n)$, is defined as the next uplink symbol with its CP starting $T'_{proc,CSI}=(Z')(2048+144)\cdot\kappa 2^{-\mu}\cdot T_C$ after the end of the last symbol in time of the latest of: aperiodic CSI-RS resource for channel measurements, aperiodic CSI-IM used for interference measurements, and aperiodic NZP CSI-RS for interference measurement, when aperiodic CSI-RS is used for channel measurement for the $n$-th triggered CSI report, and where $T_{switch}$ is defined in clause 6.4 and is applied only if $Z_1$ of table 5.4-1 is applied.

If the PUSCH indicated by the DCI is overlapping with another PUCCH or PUSCH, then the CSI report(s) are multiplexed following the procedure in clause 9.2.5 of [6, TS 38.213] and clause 5.2.5 when applicable, otherwise the CSI report(s) are transmitted on the PUSCH indicated by the DCI.

When the *CSI request* field on a DCI triggers a CSI report(s) on PUSCH, if the first uplink symbol to carry the corresponding CSI report(s) including the effect of the timing advance, starts earlier than at symbol $Z_{ref}$,
- the UE may ignore the scheduling DCI if no HARQ-ACK or transport block is multiplexed on the PUSCH.

When the *CSI request* field on a DCI triggers a CSI report(s) on PUSCH, if the first uplink symbol to carry the $n$-th CSI report including the effect of the timing advance, starts earlier than at symbol $Z'_{ref}(n)$
- the UE may ignore the scheduling DCI if the number of triggered reports is one and no HARQ-ACK or transport block is multiplexed on the PUSCH
    - Otherwise, the UE is not required to update the CSI for the $n$-th triggered CSI report.

When the PDCCH reception includes two PDCCH candidates from two respective search space sets, as described in clause 10.1 of [6, TS 38.213], for the purpose of determining the last symbol of the PDCCH triggering the CSI report(s), the PDCCH candidate that ends later in time is used.

$Z$, $Z'$ and $\mu$ are defined as:

$Z=\max Z(m)$ for m=0,…,M-1 and $Z'=\max Z'(m)$ for m=0,…,M-1, where $M$ is the number of updated CSI report(s) according to Clause 5.2.1.6, $(Z(m),Z'(m))$ corresponds to the $m$-th updated CSI report and is defined as

- $(Z_1,Z_1')$ of the table 5.4-1 if $\max\{\mu PDCCH, \mu CSI\text{-}RS, \mu UL\}\leq 3$ and if the CSI is triggered without a PUSCH with either transport block or HARQ-ACK or both when $L = 0$ CPUs are occupied (according to Clause 5.2.1.6) and the CSI to be transmitted is a single CSI and corresponds to wideband frequency-granularity where the CSI corresponds to at most 4 CSI-RS ports in a single resource without CRI report and where *CodebookType* is set to 'typeI-SinglePanel' or where *reportQuantity* is set to 'cri-RI-CQI', or (**for convenience, referred to as "condition #1"**)

- $(Z_1,Z_1')$ of the table 5.4-2 if the CSI to be transmitted corresponds to wideband frequency-granularity where the CSI corresponds to at most 4 CSI-RS ports in a single resource without CRI report and where *CodebookType* is set to 'typeI-SinglePanel' or where *reportQuantity* is set to 'cri-RI-CQI', or) (**for convenience, referred to as "condition#2"**) or

- $(Z_1,Z_1')$ of the table 5.4-2 if the CSI to be transmitted corresponds to wideband frequency-granularity where the *reportQuantity* is set to 'ssb-Index-SINR', 'cri-SINR', 'ssb-Index-SINR- Index ', or 'cri-SINR- Index ', or

- $(Z_3,Z_3')$ of the table 5.4-2 if *reportQuantity* is set to 'cri-RSRP', 'ssb-Index-RSRP', 'cri-RSRP- Index' or 'ssb-Index-RSRP-Index ', where $X\mu$ is according to UE reported capability *beamReportTiming* and $KB_l$ is according to UE reported capability *beamSwitchTiming* as defined in [13, TS 38.306], or

- $(Z_2,Z_2')$ of table 5.4-2 otherwise.) (**for convenience, referred to as "condition#3"**).

- $\mu$ of table 5.4-1 and table 5.4-2 corresponds to the min ($\mu$PDCCH, $\mu$CSI-RS, $\mu$UL) where the $\mu$PDCCH corresponds to the subcarrier spacing of the PDCCH with which the DCI was transmitted and $\mu$UL corresponds to the subcarrier spacing of the PUSCH with which the CSI report is to be transmitted and $\mu$CSI-RS corresponds to the minimum subcarrier spacing of the aperiodic CSI-RS triggered by the DCI

Table 5.4-1: CSI computation delay requirement 1

| $\mu$ | 1 $Z_1$ [symbols] | |
| --- | --- | --- |
| | $Z_1$ | $Z_1'$ |
| 0 | 10 | 8 |
| 1 | 13 | 11 |
| 2 | 25 | 21 |
| 3 | 43 | 36 |

Table 5.4-2: CSI computation delay requirement 2

| $\mu$ | 2 $Z_1$ [symbols] | | 3 $Z_2$ [symbols] | | 4 $Z_3$ [symbols] | |
| --- | --- | --- | --- | --- | --- | --- |
| | $Z_1$ | $Z_1'$ | $Z_2$ | $Z_2'$ | $Z_3$ | $Z_3'$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | min(44,$X_2$+ $KB_1$) | $X_2$ |
| 3 | 97 | 85 | 152 | 140 | min(97, $X_3$+ $KB_2$) | $X_3$ |
| 5 | 388 | 340 | 608 | 560 | min(388, $X5$+ $KB3$) | $X5$ |
| 6 | 776 | 680 | 1216 | 1120 | min(776, $X6$+ $KB4$) | $X6$ |

Referring to Table 11, the UE determines whether the conditions for valid CSI report are satisfied based on the Z value and the Z' value.

The Z value relates to the length of time from the last symbol of the PDCCH that triggers the CSI reporting to the first symbol of the CSI report. In detail, the UE calculates Zref based on the Z value. To satisfy the requirements for valid CSI report, the time length from the end of the last symbol of the PDCCH that triggers the CSI reporting to the start of the CP of the first symbol of the CSI report needs to be at least Zref. Otherwise, the UE may not perform the CSI reporting requested by the PDCCH because there is no valid CSI report.

The Z' value relates to the length of time from the last symbol of the CSI-RS resource to the first symbol of the CSI report. In detail, the UE calculates Z'ref based on the Z' value. To satisfy the requirements for valid CSI report, the time length from the end of the last symbol of the CSI-RS to the start of the CP of the first symbol of the CSI report needs to be at least Z'ref. Otherwise, the UE may not perform the corresponding CSI reporting because there is no valid CSI report.

Condition #1 in Table 11 above means that when a significant number of conditions are satisfied, such as {maximum SCS is 120 kHz SCS, aperiodic CSI on CSI-only PUSCH triggered by UL grant, L=0 CPU occupied, number of CSI-RS resources configured in CSI report is 1, number of antenna ports configured in the corresponding CSI-RS resource is at most 4, feedback is possible in a relatively short time. Condition #2 of in Table 11 above means that feedback is possible in a relatively fast time (although a little slower than condition #1) when the conditions of {wideband CQI/PMI, number of CSI-RS resources configured in CSI report is 1, number of antenna ports set in the corresponding CSI-RS resource is up to 4, type-1 codebook or non-PMI configuration} are satisfied. When more than one sub-configuration is configured for a single CSI reporting setting for NES purposes, it may be unclear whether the corresponding conditions are satisfied: {the number of CSI-RS resources configured for the CSI report is 1, and the number of antenna ports configured for the corresponding CSI-RS resource is at most 4}.

First, the following may be considered in determining whether "the number of CSI-RS resources configured in the CSI report is one" is satisfied.

- For Periodic CSI (P-CSI) reporting, the condition "the number of CSI-RS resources configured for the CSI report is one" may be considered satisfied only when the sum of the number of CSI-RS resources associated with each of the L sub-configurations configured for the corresponding CSI reporting setting, and the N sub-configurations activated/-triggered via MAC-CE/DCI for semi-persistent CSI (SP-CSI) or aperiodic CSI (AP-CSI) reporting is one. In detail, for type 1 SD or PD or type 1 SD + PD adaptation, only a single CSI-RS resource may be configured for CMR purposes within the corresponding CSI reporting setting, and only a single sub-configuration may be configured (for P-CSI reporting) or only a single sub-configuration may be activated/triggered (for SP-CSI reporting and/or AP-CSI reporting). Alternatively, for type 2 SD or type 2 SD + PD adaptation, only a single sub-configuration may be configured (for P-CSI reporting) or only a single sub-configuration may be activated/triggered (for SP-CSI reporting and/or AP-CSI reporting) and the number of CSI-RS resources associated with that sub-configuration may be limited to one.

Similarly, the following may be considered in determining whether "the number of antenna ports configured for the corresponding CSI-RS resource is at most 4" is satisfied.

- For P-CSI reporting, the condition "the number of antenna ports configured for the corresponding CSI-RS resource is at most 4" may be considered satisfied only when the number of antenna ports associated with each of the L sub-configurations configured for the corresponding CSI reporting setting, and the N sub-configurations activated/triggered via MAC-CE/DCI for SP-CSI or AP-CSI reporting is at most 4. In detail, for type 1 SD or type 1 SD + PD adaptation, the number of antenna ports (if not configured, antenna ports configured in the associated CSI-RS resource) based on the port subset indication information configured for the configured sub-configuration (for P-CSI reporting) or activated/triggered sub-configuration(s) (for SP-CSI reporting and/or AP-CSI reporting) may be limited to 4 or less. Alternatively, for type 2 SD or PD or type 2 SD + PD adaptation, the number of antenna ports provided through the CSI-RS resource(s) configured in the corresponding CSI reporting setting may be limited to 4 or less.

Alternatively, when one or more sub-configurations are configured for one CSI reporting setting for NES purposes, a constraint may be imposed such that condition #1 of Table 11 above is not always satisfied and only condition #2 or condition #3 is satisfied, or condition #1 and condition #2 of Table 11 above may be not always satisfied and only condition #3 is satisfied.

When a CSI reporting setting includes a list of sub-configuration(s), ambiguity may arise in determining $(Z,Z')$. When whether condition #1, condition #2, and the like are satisfied for each sub-configuration is simply checked to determine $(Z, Z')$, there is a problem that the UE may incurs an excessive processing burden in determining a combination of $(Z, Z')$.

Here, (i) the $(Z, Z')$ values according to condition #1 (i.e., the $(Z1, Z1')$ values in Table 5.4-1) are less than the $(Z, Z')$ values according to condition #2 (i.e., the $(Z1, Z1')$ values in Table 5.4-2), and (ii) the $(Z, Z')$ values according to condition #2 (i.e., the $(Z1, Z1')$ values in Table 5.4-2) are less than the $(Z, Z')$ values according to condition #3 (i.e., the $(Z2, Z2')$ values in Table 5.4-2). Therefore, when using the $(Z, Z')$ values according to Condition #3, which may ensure the most relatively ample CSI processing time, there is an advantage in that the UE may ensure CSI processing time without having to individually check whether conditions #1 and #2 are satisfied for each sub-configuration.

That is, even when CSI calculation is possible for some sub-configurations if only the CSI processing time according to condition #1 (or condition #2) is ensured, it is possible that CSI processing time according to condition #3 is required for some other sub-configurations. In this situation, when the conditions for sub-configurations are separately checked to use the minimum $(Z, Z')$ value and the $(Z, Z')$ values are determined according to the specific sub-configuration that requires the largest $(Z, Z')$ value among these sub-configurations, it may be an disadvantage of increasing the processing overhead of the UE. To resolve this problem, it is proposed to use relatively large $(Z, Z')$ values according to condition #3 that all sub-configurations may satisfy without having to check them one by one.

Reporting 'ssb-Index-SINR', 'cri-SINR', 'ssb-Index-SINR- Index' or 'cri-SINR- Index' in Table 11 is related to beam management. That is, (i) "$(Z1,Z1')$ of the table 5.4-2 if the CSI to be transmitted corresponds to wideband frequency-granularity where the reportQuantity is set to 'ssb-Index-SINR', 'cri-SINR', 'ssb-Index-SINR- Index ', or 'cri-SINR- Index ', or" and (ii) " $(Z3,Z3')$ of the table 5.4-2 if reportQuantity is set to 'cri-RSRP', 'ssb-Index-RSRP', 'cri-RSRP- Index' or 'ssb-Index-RSRP- Index ', where $X\mu$ is according to UE reported capability beamReportTiming and KBI is according to UE reported capability beamSwitchTiming as defined in [13, TS 38.306], or" is related to beam management. However, the current NES behavior does not apply to beam management, and thus condition #3 may be applied directly without having to consider whether the sub-configuration configured for NES satisfies the conditions for beam management. To be more precise, when a CSI reporting setting including a list of sub-configurations is configured in a UE, the UE does not expect a higher layer parameter reportQuantity to be configured to 'cri-RSRP', 'cri-SINR', 'cri-SINR- Index', 'cri-RSRP-Index', 'none', 'ssb-Index-RSRP', 'ssb-Index-SINR', 'ssb-Index-RSRP- Index', 'ssb-Index-SINR- Index', or 'tdcp'. Therefore, when a CSI reporting setting including a list of sub-configurations is configured in a UE, the UE may directly apply condition #3 without having to consider whether the conditions that apply when reportQuantity is configured to 'cri-RSRP', 'ssb-Index-RSRP', 'cri-RSRP- Index' or 'ssb-Index-RSRP- Index', 'ssb-Index-SINR', 'cri-SINR', 'ssb-Index-SINR- Index ', or 'cri-SINR- Index ' are satisfied.

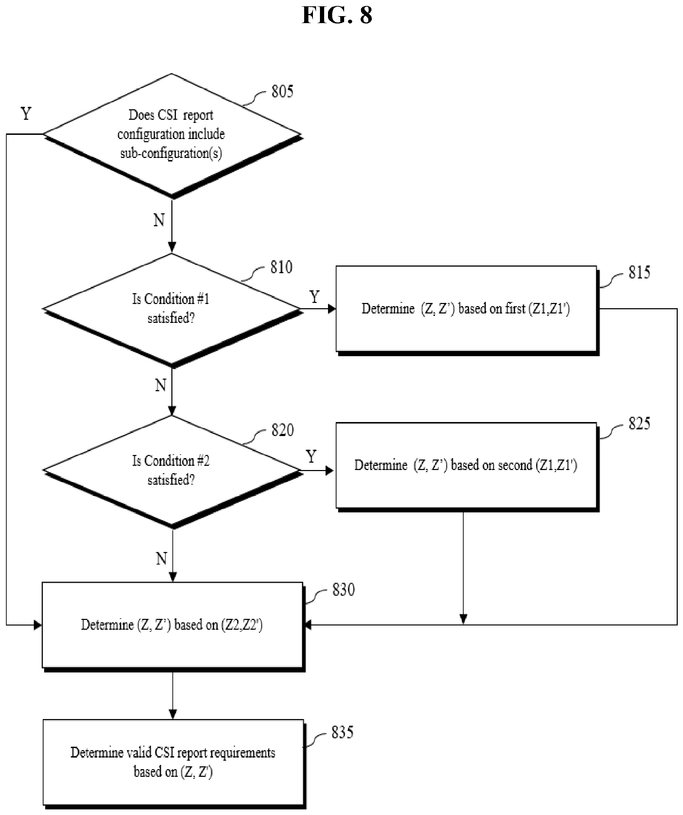

FIG. 8 is a diagram for explaining determination of CSI calculation time and valid CSI report according to an embodiment. In FIG. 8, for convenience of explanation, conditions related to beam management are excluded (or assumed not to be satisfied).

Referring to FIG. 8, the UE may determine (Z, Z') differently depending on whether the CSI reporting setting includes a sub-configuration (805). Determining the (Z, Z') values by using only condition #3 as described above may be restricted to cases in which the CSI reporting setting contains a list of sub-configuration(s). In other words, if the CSI reporting setting does not include a list of sub-configuration(s), the conditions including conditions #1 and #2 are checked as before, and if the remaining conditions are not satisfied, the (Z, Z') values may be determined according to condition #3.

For example, the UE may determine the (Z, Z') values based on the first (Z1, Z1') if the CSI reporting setting does not include a list of sub-configuration(s) and condition #1 is satisfied (810 Y, 815). The first (Z1, Z1') may mean (Z1, Z1') of Table 5.4-1 included in Table 11.

For example, the UE may determine the (Z, Z') values based on the second (Z1, Z1') if the CSI reporting setting does not include a list of sub-configuration(s) and condition #2 is satisfied (820 Y, 825). The second (Z1, Z1') may mean (Z1, Z1') of Table 5.4-2 included in Table 11.

Condition #1 and condition #2 may each be conditions related to CSI with a maximum of 4 CSI-RS ports for a single resource. In detail, condition #1 may mean that when $\max\{\mu PDCCH, \mu CSI\text{-}RS, \mu UL\} \le 3$ and L = 0 CPU is occupied (as according to section 5.2.1.6), CSI is triggered without a PUSCH containing a transport block or HARQ-ACK or both and CSI to be transmitted is a single CSI, corresponding to wideband frequency granularity, and means that the CSI corresponds to at most 4 CSI-RS ports in a single resource without CRI reporting, and CodebookType is configured to 'type1-SinglePanel' or reportQuantity is configured to 'cri-RI-CQI'. Condition #2 may mean that the CSI to be transmitted corresponds to wideband frequency granularity, corresponds to up to 4 CSI-RS ports in a single resource without CRI reporting, and CodebookType is configured to 'type1-SinglePanel' or reportQuantity is set to 'cri-RI-CQI'.

The UE may determine (Z, Z') based on (Z2,Z2') of Table 5.4-2 (820 N, 830) when the CSI reporting setting does not include a list of sub-configuration(s) and neither Condition #1 nor Condition #2 is satisfied.

Alternatively, the UE may determine (Z, Z') based only on (Z2,Z2') of Table 5.4-2 (805 Y, 830) when the CSI reporting setting includes a list of sub-configuration(s) (regardless of both Condition #1 and Condition #2).

The UE may determine whether the valid CSI report requirement is satisfied based on the determined (Z, Z') (835). In detail, the UE may determine (Zref, Z'ref) based on the determined (Z, Z'). When an interval from the end of the last symbol of the PDCCH that triggers the CSI reporting to the start of the CP of the first symbol of the CSI report is greater than or equal to Zref, and an interval from the end of the last symbol of the CSI-RS resource to the start of the CP of the first symbol of the CSI report is greater than or equal to Z'ref, the UE may determine that the valid CSI report requirement is satisfied and may perform the CSI reporting. Otherwise, the UE may determine that the requested CSI reporting is invalid and may not perform the CSI reporting.

For example, this may be defined in the standard as shown in Table 12 below.

[Table 12]

| |
|---|
| Z, Z' and $\mu$ are defined as: Z=max Z(m) for m=0,...,M-1 and Z'=max Z'(m) for m=0,...,M-1, where M is the number of updated CSI report(s) according to Clause 5.2.1.6, (Z(m),Z'(m)) corresponds to the m-th updated CSI report and is defined as - $(Z_1, Z_1')$ of the table 5.4-1 **if the CSI report does not contain a list of *L* sub-configurations provided by the higher layer parameter *[csi-ReportSubConfigList]* and** if max$\{\mu$PDCCH, $\mu$CSI-RS, $\mu$UL$\}\le$ 3 and if the CSI is triggered without a PUSCH with either transport block or HARQ-ACK or both when *L* = 0 CPUs are occupied (according to Clause 5.2.1.6) and the CSI to be transmitted is a single CSI and corresponds to wideband frequency-granularity where the CSI corresponds to at most 4 CSI-RS ports in a single resource without CRI report and where *CodebookType* is set to 'type1-SinglePanel' or where *reportQuantity* is set to 'cri-RI-CQI', or |

(continued)

| |
|---|
| - ($Z_1$,$Z_1$') of the table 5.4-2 **if the CSI report does not contain a list of** L **sub-configurations provided by the higher layer parameter** *[csi-ReportSubConfigList]* **and** if the CSI to be transmitted corresponds to wideband frequency-granularity where the CSI corresponds to at most 4 CSI-RS ports in a single resource without CRI report and where *CodebookType* is set to 'typeI-SinglePanel' or where *reportQuantity* is set to 'cri-RI-CQI', or<br><br>- ($Z_1$,$Z_1$')of the table 5.4-2 if the CSI to be transmitted corresponds to wideband frequency-granularity where the *reportQuantity* is set to 'ssb-Index-SINR', 'cri-SINR', 'ssb-Index-SINR- Index ', or 'cri-SINR- Index ', or<br><br>- ($Z_3$,$Z_3$')of the table 5.4-2 if *reportQuantity* is set to 'cri-RSRP', 'ssb-Index-RSRP', 'cri-RSRP- Index' or 'ssb-Index-RSRP-Index ', where $X_\mu$ is according to UE reported capability *beamReportTiming* and $KB_l$ is according to UE reported capability *beamSwitchTiming* as defined in [13, TS 38.306], or<br><br>- ($Z_2$,$Z_2$') of table 5.4-2 otherwise.<br><br>- $\mu$ of table 5.4-1 and table 5.4-2 corresponds to the min ($\mu$PDCCH, $\mu$CSI-RS, $\mu$UL) where the $\mu$PDCCH corresponds to the subcarrier spacing of the PDCCH with which the DCI was transmitted and $\mu$UL corresponds to the subcarrier spacing of the PUSCH with which the CSI report is to be transmitted and $\mu$CSI-RS corresponds to the minimum subcarrier spacing of the aperiodic CSI-RS triggered by the DCI |

**[Proposal #3] Defining CPU occupancy intervals for CSI reporting with one or more sub-configurations**

Table 13 shows an excerpt from the existing NR standard document, TS 38.214 v17.6.0.

[Table 13]

| |
|---|
| For a CSI report with *CSI-ReportConfig* with higher layer parameter *reportQuantity* not set to 'none', the CPU(s) are occupied for a number of OFDM symbols as follows:<br><br>- A periodic or semi-persistent CSI report (excluding an initial semi-persistent CSI report on PUSCH after the PDCCH triggering the report) occupies CPU(s) from the first symbol of the earliest one of each CSI-RS/CSI-IM/SSB resource for channel or interference measurement, respective latest CSI-RS/CSI-IM/SSB occasion no later than the corresponding CSI reference resource, until the last symbol of the configured PUSCH/PUCCH carrying the report. **(for convenience, referred to as "Case#1")**<br><br>- An aperiodic CSI report occupies CPU(s) from the first symbol after the PDCCH triggering the CSI report until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used.<br><br>- An initial semi-persistent CSI report on PUSCH after the PDCCH trigger occupies CPU(s) from the first symbol after the PDCCH until the last symbol of the scheduled PUSCH carrying the report. When the PDCCH reception includes two PDCCH candidates from two respective search space sets, as described in clause 10.1 of [6, TS 38.213], for the purpose of determining the CPU occupation duration, the PDCCH candidate that ends later in time is used.<br><br>For a CSI report with *CSI-ReportConfig* with higher layer parameter *reportQuantity* set to 'none' and *CSI-RS-ResourceSet* with higher layer parameter *trs-Info* not configured, the CPU(s) are occupied for a number of OFDM symbols as follows:<br><br>- A semi-persistent CSI report (excluding an initial semi-persistent CSI report on PUSCH after the PDCCH triggering the report) occupies CPU(s) from the first symbol of the earliest one of each transmission occasion of periodic or semi-persistent CSI-RS/SSB resource for channel measurement for L1-RSRP computation, until $Z_3$'symbols after the last symbol of the latest one of the CSI-RS/SSB resource for channel measurement for L1-RSRP computation in each transmission occasion. **(for convenience, referred to as "Case#2")**<br><br>- An aperiodic CSI report occupies CPU(s) from the first symbol after the PDCCH triggering the CSI report until the last symbol between $Z_3$ symbols after the first symbol after the PDCCH triggering the CSI report and $Z_3$' symbols after the last symbol of the latest one of each CSI-RS/SSB resource for channel measurement for L1-RSRP computation. **(for convenience, referred to as "Case#3")**<br><br>where ($Z_3$,$Z_3$') are defined in the table 5.4-2. |

**According to Table 13 above, for case #1/2/3** (in case of CSI reporting setting with one or more sub-configurations set), it may be unclear which resource the associated CSI-RS resource is.

- For the P-CSI report, the CPU occupancy interval may be defined as in case #1 above, targeting only the CSI-RS resource(s) linked to the configured L sub-configuration(s).

- For SP-CSI report, CPU occupancy interval may be defined as in case #1/2 above only for CSI-RS resource(s) associated with N sub-configuration(s) activated or triggered by MAC CE (for SP-CSI report on PUCCH) or DCI (for SP-CSI report on PUSCH) among L sub-configuration(s) configured.
- For the AP-CSI report, the CPU occupancy interval may be defined as in case #3 above only for the CSI-RS resource(s) associated with the N sub-configuration(s) triggered by DCI among the L sub-configuration(s) configured.

The corresponding method may be applied only in case of type 2 SD or SD + PD adaptation (i.e., only a subset of CSI-RS resources associated with a CSI reporting setting may be associated within one sub-configuration).

**[Proposal #4] Validity check and CSI reporting method for CSI reporting with one or more sub-configurations**

Table 14 shows an excerpt from the existing NR standard document, TS 38.214 v17.6.0.

[Table 14]

**5.4 UE CSI computation time**

When the *CSI request* field on a DCI triggers a CSI report(s) on PUSCH, the UE shall provide a valid CSI report for the *n*-th triggered report, **(> "Determine validity of CSI report")**

- if the first uplink symbol to carry the corresponding CSI report(s) including the effect of the timing advance, starts no earlier than at symbol $Z_{ref}$, and

- if the first uplink symbol to carry the *n*-th CSI report including the effect of the timing advance, starts no earlier than at symbol $Z'_{ref}(n)$,

where $Z_{ref}$ is defined as the next uplink symbol with its CP starting $T_{proc,CSI}=(Z)(2048+144)\cdot\kappa2^{-\mu}\cdot T_C +T_{switch}$ after the end of the last symbol of the PDCCH triggering the CSI report(s), and where $Z'_{ref}(n)$, is defined as the next uplink symbol with its CP starting $T'_{proc,CSI}=(Z')(2048+144)\cdot\kappa2^{-\mu}\cdot T_C$ after the end of the last symbol in time of the latest of: aperiodic CSI-RS resource for channel measurements, aperiodic CSI-IM used for interference measurements, and aperiodic NZP CSI-RS for interference measurement, when aperiodic CSI-RS is used for channel measurement for the n-th triggered CSI report, and where $T_{switch}$ is defined in clause 6.4 and is applied only if $Z_1$ of table 5.4-1 is applied. **(> Method of determining start point of Z')**

If the PUSCH indicated by the DCI is overlapping with another PUCCH or PUSCH, then the CSI report(s) are multiplexed following the procedure in clause 9.2.5 of [6, TS 38.213] and clause 5.2.5 when applicable, otherwise the CSI report(s) are transmitted on the PUSCH indicated by the DCI.

When the *CSI request* field on a DCI triggers a CSI report(s) on PUSCH, if the first uplink symbol to carry the corresponding CSI report(s) including the effect of the timing advance, starts earlier than at symbol $Z_{ref}$,

- the UE may ignore the scheduling DCI if no HARQ-ACK or transport block is multiplexed on the PUSCH.

When the *CSI request* field on a DCI triggers a CSI report(s) on PUSCH, if the first uplink symbol to carry the *n*-th CSI report including the effect of the timing advance, starts earlier than at symbol $Z'_{ref}(n)$**(> handling when Z' timeline is not satisfied)**

- the UE may ignore the scheduling DCI if the number of triggered reports is one and no HARQ-ACK or transport block is multiplexed on the PUSCH

- Otherwise, the UE is not required to update the CSI for the n-th triggered CSI report.

When the PDCCH reception includes two PDCCH candidates from two respective search space sets, as described in clause 10.1 of [6, TS 38.213], for the purpose of determining the last symbol of the PDCCH triggering the CSI report(s), the PDCCH candidate that ends later in time is used.

When the CSI processing time and resulting UE operation may be defined as described in Table 14 above, the following issues may exist for a CSI reporting setting with one or more sub-configurations configured, and the solutions for each issue are as follows.

- Issue 1: Method of checking validity of CSI reports

When multiple sub-configurations are configured (for P-CSI reporting) or multiple sub-configurations are activated/triggered (for SP/AP-CSI reporting), the validity check may be performed separately for each sub-configuration. Alternatively, it may be configured separately whether to perform the method by sub-configuration or by CSI reporting as before.

- Issue 2: Clarification of CSI-RS resources that may be involved in determining the starting point of Z'.

For the AP-CSI report, the starting point of Z' may be determined only for the CSI-RS resource(s) associated with the N sub-configuration(s) triggered by DCI among the L sub-configuration(s) configured.

- Issue 3: Handling cases in which Z' timeline is not satisfied

(i) When multiple sub-configurations are activated and the Z' timeline is satisfied for some sub-configurations (the corresponding sub-configurations are conveniently named valid sub-configurations) but the Z' timeline is not satisfied for other sub-configurations (the corresponding sub-configurations are conveniently named invalid sub-configurations), Opt1) the CSI information corresponding to the invalid sub-configuration may be dropped/omit and only the CSI information corresponding to the valid sub-configuration may be configured such that a UE may feedback/report to a BS. Alternatively, Opt2) the UE may feedback/report CSI information corresponding to all sub-configurations to the BS, but the CSI information corresponding to an invalid sub-config may not be updated from a previous report or may be reported including a default value (in the present disclosure, the default value may mean a value configured or defined in advance by the BS, and may be, for example, the lowest CQI/PMI value).

(ii) Even if multiple sub-configurations are activated and the Z' timeline is satisfied for some sub-configurations (these sub-configurations are conveniently named as valid sub-configurations) but the Z' timeline is not satisfied for other sub-configurations (these sub-configurations are conveniently named as invalid sub-configurations), the entire CSI reporting is handled in the same way as when the existing Z' timeline is not satisfied (i.e., the UE may ignore the scheduling DCI if the number of triggered reports is one and no HARQ-ACK or transport block is multiplexed on the PUSCH. Otherwise, the UE is not required to update the CSI for the n-th triggered CSI report).

(iii) The resolution to the issue may be applied only in the case in which validity check is performed separately for each sub-configuration in Issue 1 above.

The corresponding method may be applied only in case of type 2 SD or SD + PD adaptation (i.e., only a subset of CSI-RS resources associated with a CSI reporting setting may be associated within one sub-configuration).

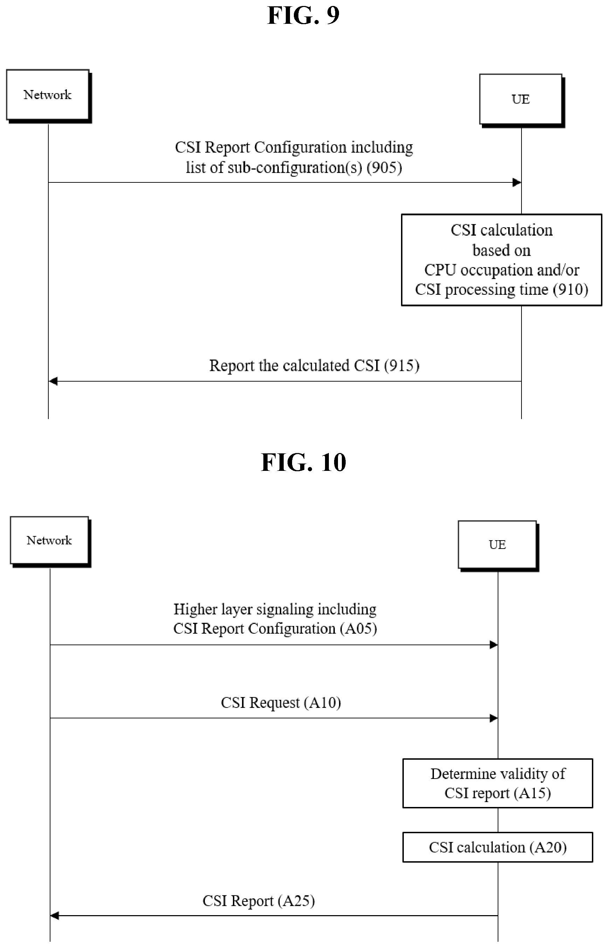

FIG. 9 illustrates an example of an operation of a UE and a network according to an embodiment.

Referring to FIG. 9, the UE may receive a CSI reporting setting including a list of one or more sub-configurations from a network through higher layer signaling (905).

The UE may calculate CSI based on the proposed method of CPU occupation, CSI-RS resource/port counting, and/or CSI processing time (910).

The UE may transmit the calculated CSI to the network for the CSI reporting setting (915).

FIG. 10 illustrates an example of aperiodic CSI reporting according to an embodiment.

The UE may receive CSI reporting setting(s) from the network via higher layer signaling (A05). It is assumed that at least one of the CSI reporting setting(s) contains a list of sub-configurations(s). For each sub-configuration, at least one of a CSI codebook, an enablement of a CSI-RS antenna port subset, a CSI-RS resource subset, or power offset information may be separately configured.

The UE may receive a CSI request from the network (A10). The CSI request may be received via DCI included in the PDCCH. The CSI request may be a request to transmit CSI reports aperiodically based on CSI reporting setting that includes a list of sub-configuration(s).

The UE may determine the validity of the requested aperiodic CSI report (A15). The UE may determine (Z, Z') and may determine (Zref, Z'ref) based on this. The UE may determine the validity of the requested aperiodic CSI report based on the determined (Zref, Z'ref). The Z value (and/or Zref) may be related to the time length from the end of the last symbol of the PDCCH to the start of the CP of the first symbol of the CSI report. The Z' value (and/or Z'ref) may be related to the time length from the end of the last symbol of the CSI-RS resource to the start of the CP of the first symbol of the CSI report.

The UE may determine the Z value and the Z' value based only on Z2, Z2' of Table 5.4-2 included in Table 11 described above, based on the fact that the aperiodic CSI report is related to a CSI reporting setting that includes a list of sub-configuration(s).

The UE may calculate and report CSI if it determines that the requested aperiodic CSI report is valid (A20 and A25). Aperiodic CSI report may be transmitted over a PUSCH.

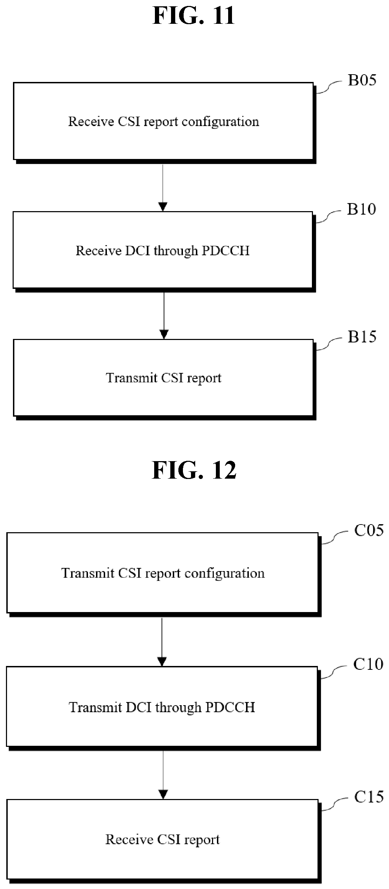

FIG. 11 illustrates a flow of a UE operation according to an embodiment.

Referring to FIG. 11, the UE may receive channel state information (CSI) report configurations through higher layer signaling (B05).

The UE may receive downlink control information (DCI) containing information for a CSI request through a physical downlink control channel (PDCCH) (B10).

The UE may transmit a CSI report related to the CSI request based on whether the conditions for valid CSI report are satisfied (B15).

The UE may determine whether the conditions for valid CSI report are satisfied based on the Z value and the Z' value. The Z value may be related to the time length from the last symbol of the PDCCH to the first symbol of the CSI report, and the Z' value may be related to the time length from the last symbol of the CSI-RS resource to the first symbol of the CSI report.

Based on the CSI report configuration including a list of sub-configurations for separately configuring at least one of a CSI codebook, an enablement of a CSI-RS antenna port subset, a CSI-RS resource subset, or power offset information for each sub-configuration, the UE may: determine the Z value and the Z' value based on only a part of the (Z, Z')-candidate values among a plurality of (Z, Z')-candidate values.

Based on the CSI report configuration including the list of the sub-configurations, the UE may determine the Z value and the Z' value only based on the third (Z, Z')-candidate values, excluding the first (Z, Z')-candidate values and the second (Z, Z')-candidate values for each of a plurality of conditions related to CSI, which are not more than 4 CSI-RS ports for a single resource.

The multiple conditions include a first condition, and the first condition may be satisfied when (i) a numeral related to subcarrier spacing (SCS) is less than a threshold, (ii) CSI is triggered while 0 CSI processing units (CPUs) are occupied, (iii) a physical uplink shared channel (PUSCH) for transmitting the CSI report does not include any of a transport block or HARQ-ACK, (iv) the CSI report does not include a CSI-RS Resource Indicator (CRI) and has a wideband frequency granularity with a maximum of 4 CSI-RS ports or less for a single resource, and (v) a codebook type is a single panel or a report content is configured to cri-rank indicator-channel quality indicator (cri-RI-CQI).

The multiple conditions include a second condition, and the second condition may be satisfied when (iv) the CSI report does not include a CSI-RS Resource Indicator (CRI) and has a wideband frequency granularity with a maximum of 4 CSI-RS ports or less for a single resource, and (v) the codebook type is a single panel or the report content is configured to cri-rank indicator-channel quality indicator (cri-RI-CQI).

The plurality of (Z, Z')-candidate values may include first (Z, Z')-candidate values, second (Z, Z')-candidate values greater than the first (Z, Z')-candidate values for the same numerology, and third (Z, Z')-candidate values greater than the first (Z, Z')-candidate values and the second (Z, Z')-candidate values for the same numerology. Based on the CSI report configuration including the list of the sub-configurations, the UE may determine the Z value and the Z' value based only on the third (Z, Z')-candidate values.

The Z value may be related to the time length from the end of the last symbol of the PDCCH to the start of a cyclic prefix (CP) of the first symbol of the CSI report, and the Z' value may be related to the time length from the end of the last symbol of the CSI-RS resource to the start of the CP of the first symbol of the CSI report.

Based on the CSI report configuration including the list of the sub-configurations, the UE may determine the Z value and the Z' value based only on Z2, Z2' of Table 5.4-2 included in Table 11 described above.

FIG. 12 illustrates a flow of a BS operation according to an embodiment.

Referring to FIG. 12, the BS may transmit channel state information (CSI) report configurations through higher layer signaling (C05).

The BS may transmit downlink control information (DCI) containing information for a CSI request through a physical downlink control channel (PDCCH) (C10).

The BS may receive a CSI report related to the CSI request based on that the conditions for valid CSI report are satisfied (B15).

Whether the conditions for valid CSI report are satisfied may be determined based on the Z value and the Z' value. The Z value may be related to the time length from the last symbol of the PDCCH to the first symbol of the CSI report, and the Z' value may be related to the time length from the last symbol of the CSI-RS resource to the first symbol of the CSI report.

Based on the CSI report configuration including a list of sub-configurations for separately configuring at least one of a CSI codebook, an enablement of a CSI-RS antenna port subset, a CSI-RS resource subset, or power offset information for each sub-configuration, the Z value and the Z' value may be determined based on only a part of the (Z, Z')-candidate values among a plurality of (Z, Z')-candidate values.

Based on the CSI report configuration including the list of the sub-configurations, the BS may determine the Z value and the Z' value only based on the third (Z, Z')-candidate values, excluding the first (Z, Z')-candidate values and the second (Z, Z')-candidate values for each of a plurality of conditions related to CSI, which are not more than 4 CSI-RS ports for a single resource.

The multiple conditions include a first condition, and the first condition may be satisfied when (i) a numeral related to subcarrier spacing (SCS) is less than a threshold, (ii) CSI is triggered while 0 CSI processing units (CPUs) are occupied, (iii) a physical uplink shared channel (PUSCH) for transmitting the CSI report does not include any of a transport block or HARQ-ACK, (iv) the CSI report does not include a CSI-RS Resource Indicator (CRI) and has a wideband frequency granularity with a maximum of 4 CSI-RS ports or less for a single resource, and (v) a codebook type is a single panel or a report content is configured to cri-rank indicator-channel quality indicator (cri-RI-CQI).

The multiple conditions include a second condition, and the second condition may be satisfied when (iv) the CSI report does not include a CSI-RS Resource Indicator (CRI) and has a wideband frequency granularity with a maximum of 4 CSI-RS ports or less for a single resource, and (v) the codebook type is a single panel or the report content is configured to cri-rank indicator-channel quality indicator (cri-RI-CQI).

The plurality of (Z, Z')-candidate values may include first (Z, Z')-candidate values, second (Z, Z')-candidate values greater than the first (Z, Z')-candidate values for the same numerology, and third (Z, Z')-candidate values greater than the first (Z, Z')-candidate values and the second (Z, Z')-candidate values for the same numerology. Based on the CSI report configuration including the list of the sub-configurations, the BS may determine the Z value and the Z' value based only on the third (Z, Z')-candidate values.

The Z value may be related to the time length from the end of the last symbol of the PDCCH to the start of a cyclic prefix (CP) of the first symbol of the CSI report, and the Z' value may be related to the time length from the end of the last symbol of the CSI-RS resource to the start of the CP of the first symbol of the CSI report.

Based on the CSI report configuration including the list of the sub-configurations, the BS may determine the Z value and the Z' value based only on Z2, Z2' of Table 5.4-2 included in Table 11 described above.

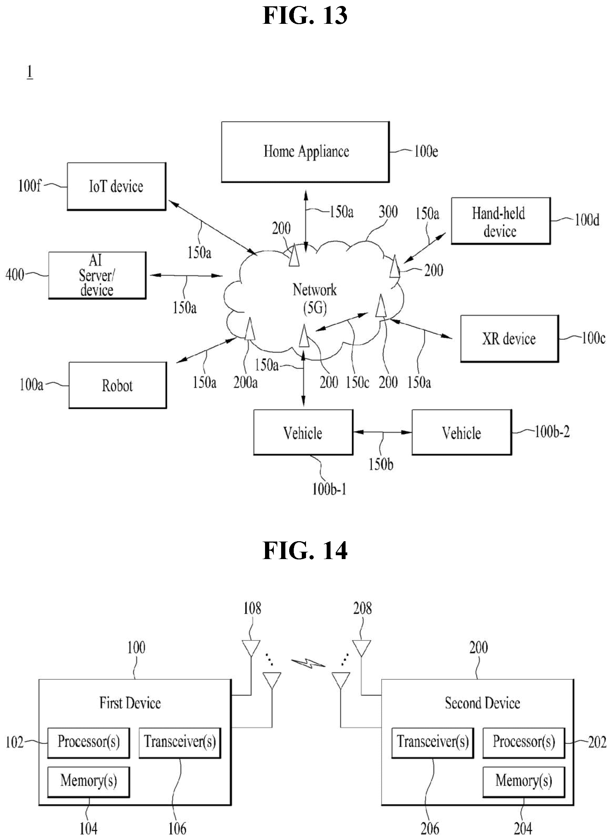

FIG. 13 illustrates a communication system 1 applied to the present disclosure.

Referring to FIG. 13, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

**1.** A method performed by a user equipment (UE), the method comprising:

receiving channel state information (CSI) report configuration via higher layer signaling;
receiving downlink control information (DCI) including information for a CSI request through a physical downlink control channel (PDCCH); and

transmitting a CSI report related to the CSI request based on a condition for valid CSI report being satisfied, wherein the UE determines whether the condition for the valid CSI report is satisfied based on a Z value and a Z' value, the Z value being related to a time length from a last symbol of the PDCCH to a first symbol of the CSI report, and the Z' value being related to a time length from a last symbol of a channel state information-reference signal (CSI-RS) to the first symbol of the CSI report, and

wherein, based on the CSI report configuration including a list of sub-configurations for separately configuring at least one of a CSI codebook, an enablement of a CSI-RS antenna port subset, a CSI-RS resource subset, or power offset information for each sub-configuration: the UE determines the Z value and the Z' value based on only a part of (Z, Z')-candidate values among a plurality of (Z, Z')-candidate values.

2. The method of claim 1, wherein, based on the CSI report configuration including the list of the sub-configurations, the UE determines the Z value and the Z' value only based on third (Z, Z')-candidate values, excluding first (Z, Z')-candidate values and second (Z, Z')-candidate values for each of a plurality of conditions related to CSI, which are not more than 4 CSI-RS ports for a single resource.

3. The method of claim 2, wherein the plurality of conditions include a first condition, and
wherein the first condition is satisfied when (i) a numerology related to subcarrier spacing (SCS) is less than a threshold, (ii) CSI is triggered while 0 CSI processing units (CPUs) are occupied, (iii) a physical uplink shared channel (PUSCH) for transmitting the CSI report does not include either a transport block or HARQ-ACK, (iv) the CSI report does not include a CSI-RS resource indicator (CRI) and has a wideband frequency granularity with a maximum of 4 CSI-RS ports or less for a single resource, and (v) a codebook type is a single panel or a report content is configured to cri-rank indicator-channel quality indicator (cri-RI-CQI).

4. The method of claim 3, wherein the plurality of conditions include a second condition, and
wherein the second condition is satisfied when (iv) the CSI report does not include a CSI-RS resource indicator (CRI) and has a wideband frequency granularity with a maximum of 4 CSI-RS ports or less for a single resource, and (v) a codebook type is a single panel or a report content is configured to cri-rank indicator-channel quality indicator (cri-RI-CQI).

5. The method of claim 1, wherein the plurality of (Z, Z')-candidate values include first (Z, Z')-candidate values, second (Z, Z')-candidate values greater than the first (Z, Z')-candidate values for the same numerology, and third (Z, Z')-candidate values greater than the first (Z, Z')-candidate values and the second (Z, Z')-candidate values for the same numerology, and
wherein, based on the CSI report configuration including the list of the sub-configurations, the UE determines the Z value and the Z' value based only on the third (Z, Z')-candidate values.

6. The method of claim 1, wherein the Z value is related to a time length from end of a last symbol of the PDCCH to start of a cyclic prefix (CP) of a first symbol of the CSI report, and
wherein the Z' value is related to a time length from end of a last symbol of the CSI-RS resource to start of the CP of the first symbol of the CSI report.

7. The method of claim 1, wherein, based on the CSI report configuration including the list of the sub-configurations, the UE determines the Z value and the Z' value based only on Table A below:

[Table A]

| μ | Z | Z' |
|---|---|---|
| 0 | 40 | 37 |
| 1 | 72 | 69 |
| 2 | 141 | 140 |
| 3 | 152 | 140 |
| 5 | 608 | 560 |
| 6 . | 1216 | 1120 |

8. A non-transitory recording medium configured to store instructions that, when executed by a processor of a user equipment (UE), cause the UE to perform the method of claim 1.

9. A device comprising:

at least one memory configured to store instructions; and
at least one processor configured to perform operations by executing the instructions,
wherein the operations performed by the at least one processor include:

receiving channel state information (CSI) report configuration via higher layer signaling;
receiving downlink control information (DCI) including information for a CSI request through a physical downlink control channel (PDCCH); and
transmitting a CSI report related to the CSI request based on a condition for valid CSI report being satisfied, wherein the device determines whether the condition for the valid CSI report is satisfied based on a Z value and a Z' value, the Z value being related to a time length from a last symbol of the PDCCH to a first symbol of the CSI report, and the Z' value being related to a time length from a last symbol of a channel state information-reference signal (CSI-RS) to the first symbol of the CSI report, and
wherein, based on the CSI report configuration including a list of sub-configurations for separately configuring at least one of a CSI codebook, an enablement of a CSI-RS antenna port subset, a CSI-RS resource subset, or power offset information for each sub-configuration: the device determines the Z value and the Z' value based on only a part of (Z, Z')-candidate values among a plurality of (Z, Z')-candidate values.

10. The device of claim 9, wherein the device further includes a transceiver, and
wherein the device is a user equipment (UE) configured to operate in a wireless communication system.

11. The device of claim 9, wherein the device is a processing device configured to control a user equipment (UE) in a wireless communication system.

12. A method performed by a base station (BS), the method comprising:

transmitting channel state information (CSI) report configuration via higher layer signaling;
transmitting downlink control information (DCI) including information for a CSI request through a physical downlink control channel (PDCCH); and
receiving a CSI report related to the CSI request based on a condition for valid CSI report being satisfied,
wherein whether the condition for the valid CSI report is satisfied is determined based on a Z value and a Z' value, the Z value being related to a time length from a last symbol of the PDCCH to a first symbol of the CSI report, and the Z' value being related to a time length from a last symbol of a channel state information-reference signal (CSI-RS) to the first symbol of the CSI report, and
wherein, based on the CSI report configuration including a list of sub-configurations for separately configuring at least one of a CSI codebook, an enablement of a CSI-RS antenna port subset, a CSI-RS resource subset, or power offset information for each sub-configuration: the Z value and the Z' value are determined based on only a part of (Z, Z')-candidate values among a plurality of (Z, Z')-candidate values.

13. A device comprising:

at least one memory configured to store instructions; and
at least one processor configured to perform operations by executing the instructions,
wherein the operations performed by the at least one processor include:

transmitting channel state information (CSI) report configuration via higher layer signaling;
transmitting downlink control information (DCI) including information for a CSI request through a physical downlink control channel (PDCCH); and
receiving a CSI report related to the CSI request based on a condition for valid CSI report being satisfied,
whether the condition for the valid CSI report is satisfied is determined based on a Z value and a Z' value, the Z value being related to a time length from a last symbol of the PDCCH to a first symbol of the CSI report, and the Z' value being related to a time length from a last symbol of a channel state information-reference signal (CSI-RS) to the first symbol of the CSI report, and
wherein, based on the CSI report configuration including a list of sub-configurations for separately configuring at least one of a CSI codebook, an enablement of a CSI-RS antenna port subset, a CSI-RS resource subset, or power offset information for each sub-configuration: the Z value and the Z' value are determined based on only a part of (Z, Z')-candidate values among a plurality of (Z, Z')-candidate values.

14. The device of claim 13, wherein the device further includes a transceiver, and
wherein the device is a base station (BS) configured to operate in a wireless communication system.

15. The device of claim 13, wherein the device is a processing device configured to control a base station (BS) in a wireless communication system.

# FIG. 1

Initial Cell Search — System Information Reception — Random Access Procedure — General DL/UL Tx/Rx

PSS/SSS & [DLRS] & PBCH — PDCCH/PDSCH (BCCH) — PRACH — PDCCH/PDSCH — PRACH — PDCCH/PDSCH — PDCCH/PDSCH — PUSCH/PUCCH

S101    S102    S103    S104    S105    S106    S107    S108

- DL/UL ACK/NACK
- UE CQI/PMI/Rank Report using PUSCH and PUCCH

# FIG. 2

One Frame (10ms)

Half-Frame (5ms)    Half-Frame (5ms)

Subframe 0 (1ms)    Subframe 4 (1ms)    Subframe 5 (1ms)    Subframe 9 (1ms)

Subframe (1ms)

15KHz    Slot (14 symbols)    1ms

30KHz    Slot 0 (14 symbols)    Slot 1    500us

60KHz    Slot 0 (14 symbols)    Slot 1    Slot 2    Slot 3    250us

120KHz    Slot 0 (14 symbols)    Slot 1    Slot 2    Slot 3    Slot 4    Slot 5    Slot 6    Slot 7    125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

PDCCH

PUSCH

# FIG. 7

UE

BS

Configuration Information related to CSI (710)

RS(e.g., CSI-RS) (720)

Calculate CSI (730)

Report CSI (740)

# FIG. 8

805 — Does CSI report configuration include sub-configuration(s)

Y →

N ↓

810 — Is Condition #1 satisfied?

Y → 815 — Determine $(Z, Z')$ based on first $(Z1, Z1')$

N ↓

820 — Is Condition #2 satisfied?

Y → 825 — Determine $(Z, Z')$ based on second $(Z1, Z1')$

N ↓

830 — Determine $(Z, Z')$ based on $(Z2, Z2')$

↓

835 — Determine valid CSI report requirements based on $(Z, Z')$

# FIG. 9

Network          UE

CSI Report Configuration including
list of sub-configuration(s) (905)

CSI calculation
based on
CPU occupation and/or
CSI processing time (910)

Report the calculated CSI (915)

# FIG. 10

Network          UE

Higher layer signaling including
CSI Report Configuration (A05)

CSI Request (A10)

Determine validity of
CSI report (A15)

CSI calculation (A20)

CSI Report (A25)

# FIG. 11

Receive CSI report configuration — B05

Receive DCI through PDCCH — B10

Transmit CSI report — B15

# FIG. 12

Transmit CSI report configuration — C05

Transmit DCI through PDCCH — C10

Receive CSI report — C15

# FIG. 13

1

# FIG. 14

# EP 4 787 727 A1

## INTERNATIONAL SEARCH REPORT

| International application No. |
| --- |
| **PCT/KR2024/014348** |

### A. CLASSIFICATION OF SUBJECT MATTER

**H04B 7/06**(2006.01)i; **H04W 52/02**(2009.01)i; **H04B 7/08**(2006.01)i; **H04W 72/21**(2023.01)i; **H04W 72/231**(2023.01)i; **H04W 72/232**(2023.01)i; **H04W 8/24**(2009.01)i; **H04L 5/00**(2006.01)i

According to International Patent Classification (IPC) or to both national classification and IPC

### B. FIELDS SEARCHED

Minimum documentation searched (classification system followed by classification symbols)

H04B 7/06(2006.01); H04L 5/00(2006.01); H04W 24/10(2009.01); H04W 56/00(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), 서브-설정(sub-configuration), 조건(condition), 유효(valid), 후보(candidate)

### C. DOCUMENTS CONSIDERED TO BE RELEVANT

| Category* | Citation of document, with indication, where appropriate, of the relevant passages | Relevant to claim No. |
| --- | --- | --- |
| X<br>A | SAMSUNG. Remaining issues on NES techniques in spatial and power domains. R1-2307690, 3GPP TSG RAN WG1 #114. Toulouse, France. 11 August 2023.<br>See sections 4.1 and 5.2. | 1-2,5-6,8-15<br>3-4,7 |
| A | APPLE. Discussion on remaining issues for spatial and power domain enhancements to support network energy saving. R1-2307290, 3GPP TSG RAN WG1 #114. Toulouse, France. 11 August 2023.<br>See section 3. | 1-15 |
| A | QUALCOMM INCORPORATED. Techniques in spatial and power domains. R1-2305349, 3GPP TSG RAN WG1 #113. Incheon, Korea. 14 May 2023.<br>See section 3. | 1-15 |
| A | US 2022-0353879 A1 (LG ELECTRONICS INC.) 03 November 2022 (2022-11-03)<br>See paragraphs [0244]-[0387]; and figure 9. | 1-15 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **14 January 2025** | **15 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

47

**INTERNATIONAL SEARCH REPORT**

| International application No. |
|---|
| **PCT/KR2024/014348** |

| C. | DOCUMENTS CONSIDERED TO BE RELEVANT | |
|---|---|---|
| Category* | Citation of document, with indication, where appropriate, of the relevant passages | Relevant to claim No. |
| A | US 2022-0376871 A1 (TELEFONAKTIEBOLAGET LM ERICSSON (PUBL)) 24 November 2022 (2022-11-24) <br> See paragraphs [0133]-[0156]; and figures 9-14. | 1-15 |

Form PCT/ISA/210 (second sheet) (July 2022)

**INTERNATIONAL SEARCH REPORT**
Information on patent family members

International application No.

**PCT/KR2024/014348**

| Patent document cited in search report | | | Publication date (day/month/year) | Patent family member(s) | | | Publication date (day/month/year) |
|---|---|---|---|---|---|---|---|
| US | 2022-0353879 | A1 | 03 November 2022 | CN | 117063581 | A | 14 November 2023 |
| | | | | EP | 4322663 | A1 | 14 February 2024 |
| | | | | JP | 2024-512807 | A | 19 March 2024 |
| | | | | KR | 10-2023-0061552 | A | 08 May 2023 |
| | | | | KR | 10-2592656 | B1 | 24 October 2023 |
| | | | | WO | 2022-215957 | A1 | 13 October 2022 |
| US | 2022-0376871 | A1 | 24 November 2022 | CN | 114365445 | A | 15 April 2022 |
| | | | | CN | 114365445 | B | 30 July 2024 |
| | | | | EP | 4018588 | A1 | 29 June 2022 |
| | | | | JP | 2022-549767 | A | 29 November 2022 |
| | | | | JP | 7530965 | B2 | 08 August 2024 |
| | | | | WO | 2021-038429 | A1 | 04 March 2021 |

Form PCT/ISA/210 (patent family annex) (July 2022)